# EUROPEAN PATENT APPLICATION

(11) **EP 4 321 589 A1**
(43) Date of publication of application: **14.02.2024**
(21) Application number: 22784728.2
(22) Date of filing: 08.04.2022
(51) Int. Cl.: C09J 183/06, C08G 77/388, C09J 183/08

(54) **POLYSILOXANE COMPOSITION, ADHESIVE, METHOD FOR PRODUCING POLYSILOXANE COMPOSITION, AND METHOD FOR PRODUCING ADHESIVE**

(30) Priority: 09.04.2021 JP 2021066515
(71) Applicant: Kagoshima University, Kagoshima-shi, Kagoshima 890-8580 (JP); SHIN-ETSU CHEMICAL CO., LTD., Tokyo 1000005 (JP)
(72) Inventor: KANEKO Yoshiro, Kagoshima-shi, Kagoshima 890-8580 (JP); NAKAGAWA Hideo, Tokyo 100-0005 (JP); OZAI Toshiyuki, Annaka-shi, Gunma 379-0224 (JP); AKETA Takashi, Annaka-shi, Gunma 379-0224 (JP)
(74) Representative: v. Bezold & Partner Patentanwälte - PartG mbB
(86) International application number: PCT/JP2022/017342
(87) International publication number: WO 2022/215746

(57) **Abstract**

To provide an adhesive capable of realizing adhesion excellent in shear strength and impact resistance, a polysiloxane composition usable as a component contained in the adhesive, and respective methods for producing the adhesive and the polysiloxane composition. The polysiloxane composition is a copolymer of an adhesive monomer unit A including an organosiloxane unit containing a substituent R ^{A2} containing a catechol group, and a flexible monomer unit B including an organosiloxane unit containing no catechol group.

## Description

### Technical Field

The present disclosure relates to a polysiloxane composition, an adhesive, a method for producing a polysiloxane composition, and a method for producing an adhesive.

### Background Art

In recent years, proteins secreted from marine organisms such as *Mytilus edulis,* having adhesion properties, have attracted attention. Catechol groups contained in such proteins have been revealed to contribute to exhibition of adhesion properties. Applications of catechol groups to adhesives have also been studied (see, Patent Literature 1 below).

### Citation List

### Patent Literature

Patent Literature 1: International Publication No. WO 2005/056708

### Summary of Invention

### Technical Problem

An objective of the present disclosure is to provide an adhesive capable of realizing adhesion excellent in shear strength and impact resistance, a polysiloxane composition usable as a component contained in the adhesive, and respective methods for producing the adhesive and the polysiloxane composition.

### Solution to Problem

A polysiloxane composition according to the present disclosure is a copolymer of
an adhesive monomer unit including an organosiloxane unit containing a substituent containing a catechol group, and
a flexible monomer unit including an organosiloxane unit containing no catechol group.

Both the adhesive monomer unit and the flexible monomer unit may be D units, and the adhesive monomer unit and the flexible monomer unit may constitute a linear main chain.

The flexible monomer unit may occupy 47% by mol or more and 95% by mol or less of the polysiloxane composition.

The substituent containing the catechol group may contain a hydrocarbon group.

The substituent containing the catechol group may contain a urea group.

The catechol group may be a denatured catechol group having a silylated structure where each hydrogen atom of two hydroxy groups linked at ortho positions of a benzene ring is substituted with an alkylsilyl group.

An adhesive according to the present disclosure includes the above-mentioned polysiloxane composition according to the present disclosure.

The adhesive according to the present disclosure may include a first polysiloxane composition and a second polysiloxane composition that each include the above-mentioned polysiloxane composition according to the present disclosure and have the flexible monomer unit in content rates different from each other.

The adhesive according to the present disclosure may further include a third polysiloxane composition that includes the above-mentioned polysiloxane composition according to the present disclosure and has the flexible monomer unit in a content rate different from those in the first polysiloxane composition and the second polysiloxane composition.

A method for producing a polysiloxane composition according to the present disclosure includes
generating a precursor polysiloxane composition that is a copolymer of a first siloxane unit containing a substituent containing a urea group, and a second siloxane unit containing a substituent including a hydrocarbon group, and
introducing, by reacting the precursor polysiloxane composition with catecholamine, a catechol group where two hydroxy groups are linked at ortho positions of a benzene ring, into the first siloxane unit, via a urea bond containing the urea group.

The generating may include
forming a copolymer of a precursor first siloxane unit that serves as a precursor of the first siloxane unit and contains, in a substituent, a compound containing an ammonium group, and the second siloxane unit, and
replacing, by reacting the formed copolymer with a carbonyl compound, the compound containing the ammonium group, in the precursor first siloxane unit, with a compound containing the urea group.

The second siloxane unit may be a dimethylsiloxane unit.

The method for producing the polysiloxane composition according to the present disclosure may further include, following the introducing, substituting, by reacting a polymer obtained in the introducing with a silylation agent, each hydrogen atom of the two hydroxy groups linked at the ortho positions of the benzene ring, with an alkylsilyl group.

The method for producing the polysiloxane composition according to the present disclosure may include, following the substituting, reforming, by substituting the alkylsilyl group with the hydrogen atom again, a structure where the two hydroxy groups are linked at the ortho positions of the benzene ring.

A method for producing an adhesive according to the present disclosure includes
preparing a first polysiloxane composition and a second polysiloxane composition that are each obtained by the above-mentioned method for producing the polysiloxane composition according to the present disclosure and have the second siloxane unit in content rates different from each other, and
mixing the first polysiloxane composition and the second polysiloxane composition.

In the preparing, at least a third polysiloxane composition may be further prepared separately from the first polysiloxane composition and the second polysiloxane composition,
the third polysiloxane composition may be obtained by the above-mentioned method for producing the polysiloxane composition according to the present disclosure, and have the second siloxane unit in a content rate different from those in the first polysiloxane composition and the second polysiloxane composition, and
in the mixing, at least the third polysiloxane composition may be further mixed in addition to the first polysiloxane composition and the second polysiloxane composition.

### Advantageous Effects of Invention

The adhesive according to the present disclosure includes a copolymer of an adhesive monomer unit and a flexible monomer unit, and thus can realize adhesion excellent in shear strength and impact resistance.

### Brief Description of Drawings

FIG. 1 is a conceptual scheme illustrating a local chemical structure of a polysiloxane composition according to Embodiment 1;
FIG. 2 is a conceptual scheme illustrating a global structure of the polysiloxane composition according to Embodiment 1;
FIG. 3 is a flowchart illustrating a method for producing the polysiloxane composition according to Embodiment 1;
FIG. 4 is a conceptual scheme illustrating a copolymerization step according to Examples 1 to 4;
FIG. 5 is a conceptual scheme illustrating a urea group formation step and a catechol group introduction step according to Examples 1 to 4;
FIG. 6 is a graph illustrating Fourier transform infrared spectroscopy (FT-IR) spectra of polysiloxane compositions according to Examples 1 to 4;
FIG. 7 is a graph illustrating proton nuclear magnetic resonance (¹H-NMR) spectra of the polysiloxane compositions according to Examples 1 to 4;
FIG. 8 is a conceptual scheme illustrating a creation procedure of a sample for evaluation;
FIG. 9A is a stress-strain diagram of samples for evaluation according to Example 4 and Comparative Example 4;
FIG. 9B is a stress-strain diagram of samples for evaluation according to Example 3 and Comparative Example 3;
FIG. 9C is a stress-strain diagram of samples for evaluation according to Example 2 and Comparative Example 2;
FIG. 9D is a stress-strain diagram of samples for evaluation according to Example 1 and Comparative Example 1;
FIG. 10 is a stress-strain diagram in the case of a decrease in an area of an adhered surface of each of samples for evaluation according to Examples 1 to 4 and Commercial Reference Examples 1 to 10;
FIG. 11A is a stress-strain diagram of a sample for glass fiber-reinforced epoxy resin adhesiveness evaluation according to Example 3;
FIG. 11B is a stress-strain diagram in the case of a decrease in the area of an adhered surface of the sample for glass fiber-reinforced epoxy resin adhesiveness evaluation according to Example 3;
FIG. 12 is a stress-strain diagram of a sample for oxidatively unprocessed copper adhesiveness evaluation and a sample for oxidatively processed copper adhesiveness evaluation according to Example 3;
FIG. 13 is a stress-strain diagram after immersion in water for 2 days, of samples for adhesion evaluation according to Examples 1 to 4 and Commercial Reference Examples 1 to 2;
FIG. 14A is a photograph illustrating the result of an impact resistance test of a sample for evaluation according to Example 4;
FIG. 14B is a photograph illustrating the result of an impact resistance test of a sample for evaluation according to Example 1;
FIG. 14C is a photograph illustrating the result of an impact resistance test of a sample for evaluation according to Comparative Example 5;
FIG. 15 is a flowchart illustrating a method for producing a polysiloxane composition according to Embodiment 2;
FIG. 16 is a conceptual scheme illustrating a configuration of a silylation agent according to Embodiment 2;
FIG. 17 is a conceptual scheme illustrating a global structure of a protected polysiloxane composition according to Embodiment 2;
FIG. 18 is a conceptual scheme illustrating an alkylsilyl group introduction step according to Example 5;
FIG. 19 is a graph illustrating a ¹H-NMR spectrum of a protected polysiloxane composition according to Example 5;
FIG. 20 is a conceptual scheme illustrating an alkylsilyl group detachment step according to Example 5;
FIG. 21 is a flowchart illustrating a method for producing an adhesive according to Embodiment 3;
FIG. 22 is a graph illustrating an FT-IR spectrum of a polysiloxane composition according to Example 6; and
FIG. 23 is a graph illustrating a ¹H-NMR spectrum of the polysiloxane composition according to Example 6.

### Description of Embodiments

Hereinafter, one specific example of the above-mentioned polysiloxane composition according to the present disclosure is described with respect to each of polysiloxane compositions according to Embodiment 1 to Embodiment 3.

### Embodiment 1

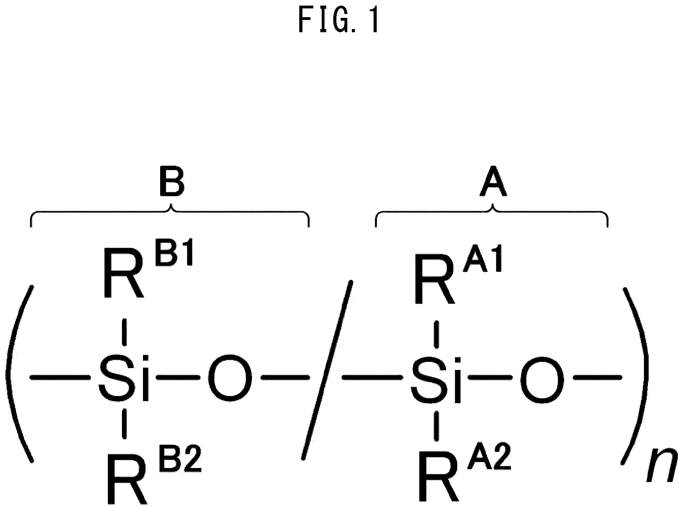

FIG. 1 illustrates a chemical structure of a monomer unit of a polysiloxane composition according to the present embodiment. The polysiloxane composition according to the present embodiment is a copolymer of an adhesive monomer unit A mainly contributing to adhesiveness and a flexible monomer unit B mainly contributing to flexibility.

The diagonal in FIG. 1 means that the arrangement of the adhesive monomer unit A and the flexible monomer unit B in the polysiloxane composition is unregulated. In other words, the polysiloxane composition according to the present embodiment is a random copolymer of the adhesive monomer unit A and the flexible monomer unit B.

The adhesive monomer unit A contains a siloxane unit where two substituents R^{A1} and R^{A2} are bound to a silicon atom, namely, a D unit. One substituent R^{A1} includes a hydrocarbon group. Other substituent R^{A2} contains a catechol group that is a group contributing to adhesiveness. The molar ratio of catechol group: adhesive monomer unit A is 1:1.

The flexible monomer unit B includes an organosiloxane unit containing no catechol group. Specifically, the flexible monomer unit B is a D unit containing two substituents R^{B1} and R^{B2} each including a hydrocarbon group containing no catechol group.

The hydrocarbon group constituting each of the substituents R^{A1}, R^{B1}, and R^{B2}, here used, can be, for example, one having 10 or less carbon atoms, specifically, an alkyl group having 10 or less carbon atoms. The alkyl group is preferably a methyl group. Such three substituents R^{A1}, R^{B1}, and R^{B2} may be the same as or different from one another. In other words, for example, the substituent R^{A1} may be a methyl group and the flexible monomer unit B may be a dimethylsiloxane unit.

In this regard, one of the substituents R^{A1}, R^{B1}, and R^{B2} may be different from the remaining substituents, or all thereof may be different from one another.

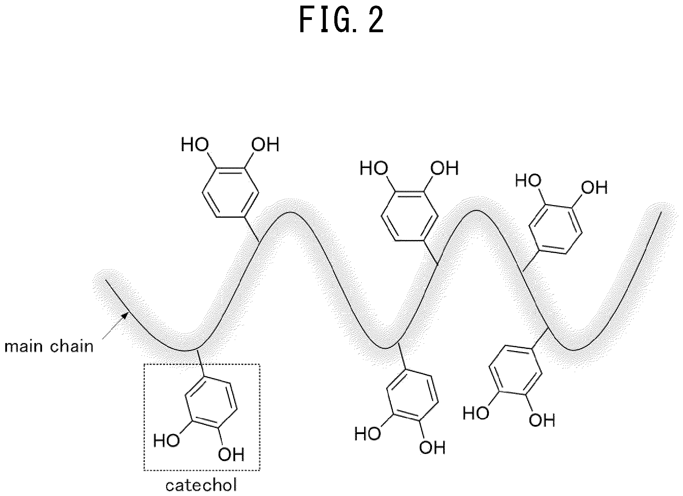

FIG. 2 illustrates a global structure of the polysiloxane composition according to the present embodiment. The polysiloxane composition according to the present embodiment has a structure where a plurality of catechol groups as side chains is bound to a main chain. The catechol groups are discretely repeatedly placed in the length direction of the main chain.

Such each catechol group is contained in the substituent R^{A2} illustrated in FIG. 1. The main chain includes a random arrangement of a moiety other than the catechol group in the adhesive monomer unit A illustrated in FIG. 1, and the flexible monomer unit B. In the present embodiment, both the adhesive monomer unit A and the flexible monomer unit B are D units, and thus the main chain is linear.

The flexible monomer unit B illustrated in FIG. 1 does not contain any catechol group in the substituents R^{B1} and R^{B2}, and thus serves to inhibit the binding density of the catechol group relative to the main chain illustrated in FIG. 2, from being excessive, and to make the main chain flexible.

Such making the main chain flexible means that, when the polysiloxane composition according to the present embodiment is used as a component contained in an adhesive, shear strength and impact resistance in adhesion can be enhanced. In other words, the flexible monomer unit B serves to impart shear strength and impact resistance to strong adhesiveness exhibited by the catechol group of the adhesive monomer unit A.

It is preferable for imparting excellent flexibility to the main chain without any loss in strong adhesiveness of the catechol group that the flexible monomer unit B occupies 47% by mol or more and 95% by mol or less of 100% by mol of the polysiloxane composition and the adhesive monomer unit A occupy the balance. The molar ratio between the adhesive monomer unit A and the flexible monomer unit B can be identified by the integral ratio of signals appearing in a ¹H-NMR spectrum.

Next, a method for producing the polysiloxane composition according to the present embodiment is described.

First, a linear copolymer of a first siloxane unit that is a precursor of the adhesive monomer unit A, and a second siloxane unit serving as the flexible monomer unit B is formed. Next, a catechol group is introduced into the first siloxane unit in the copolymer, to thereby obtain the polysiloxane composition according to the present embodiment.

According to studies by the inventors of the present application, introduction of a catechol group, if performed via a urea bond structure, is particularly efficient. In other words, a urea bond structure is desirably utilized for an increase in rate of introduction of a catechol group. Hereinafter, a method for producing a polysiloxane composition, by introducing a catechol group by use of a urea bond structure, is specifically described.

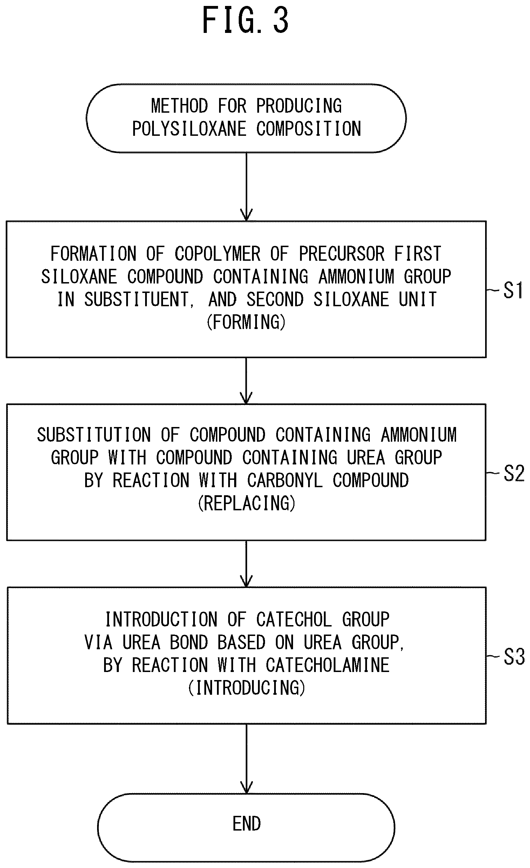

As illustrated in FIG. 3, first, a copolymer of a precursor first siloxane unit containing a compound containing an ammonium group, in a substituent, and a second siloxane unit containing a substituent including a hydrocarbon group is formed (copolymerization step S1).

The precursor first siloxane unit is here a precursor of the adhesive monomer unit A illustrated in FIG. 1. The substituent containing the compound containing an ammonium group, in the precursor first siloxane unit, is a precursor of the substituent R^{A2} illustrated in FIG. 1. The second siloxane unit is the same as the flexible monomer unit B illustrated in FIG. 1.

Next, the copolymer formed in copolymerization step S1 is reacted with a carbonyl compound, to thereby replace the compound containing an ammonium group, in the precursor first siloxane unit, with a compound containing a urea group (urea group formation step S2). The "urea group" herein refers to a group represented by -NH-CON= or a group represented by -NH-CO-N<.

Hereinafter, the precursor first siloxane unit where the compound containing an ammonium group is replaced with a compound containing a urea group is referred to as "first siloxane unit". The polymer undergoing this urea group formation step S2 is referred to as "precursor polysiloxane composition".

Next, the above-mentioned precursor polysiloxane composition is reacted with catecholamine, to thereby introduce a catechol group into the first siloxane unit, via a urea bond containing the above-mentioned urea group (catechol group introduction step S3). As described above, the rate of introduction of a catechol group can be increased by mediation of such a urea bond.

From the foregoing, the polysiloxane composition according to the present embodiment, where the substituent R^{A2} illustrated in FIG. 1 contains a urea bond and a catechol group bound to the urea bond, is obtained. The polysiloxane composition obtained can be used as a component contained in an adhesive, specifically, as a main component. The "main component" here means one contained at a content of more than 50% by weight, and the concept thereof encompasses a content of 100% by weight.

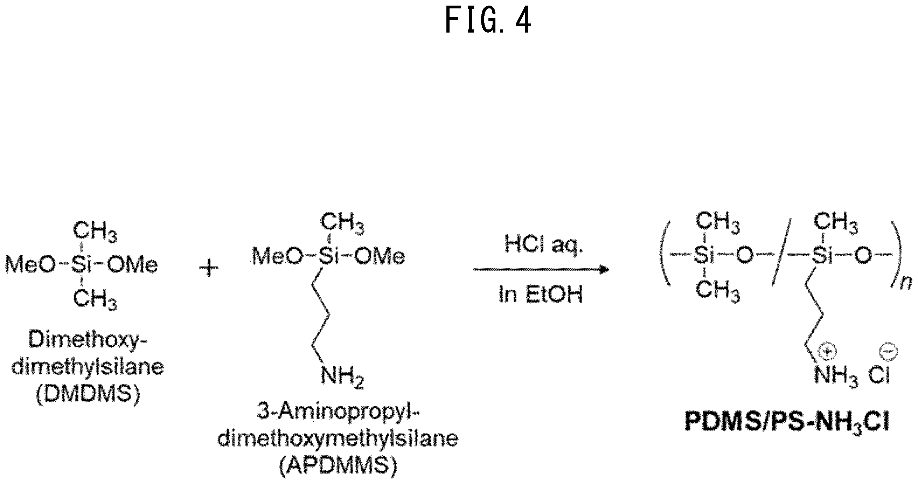

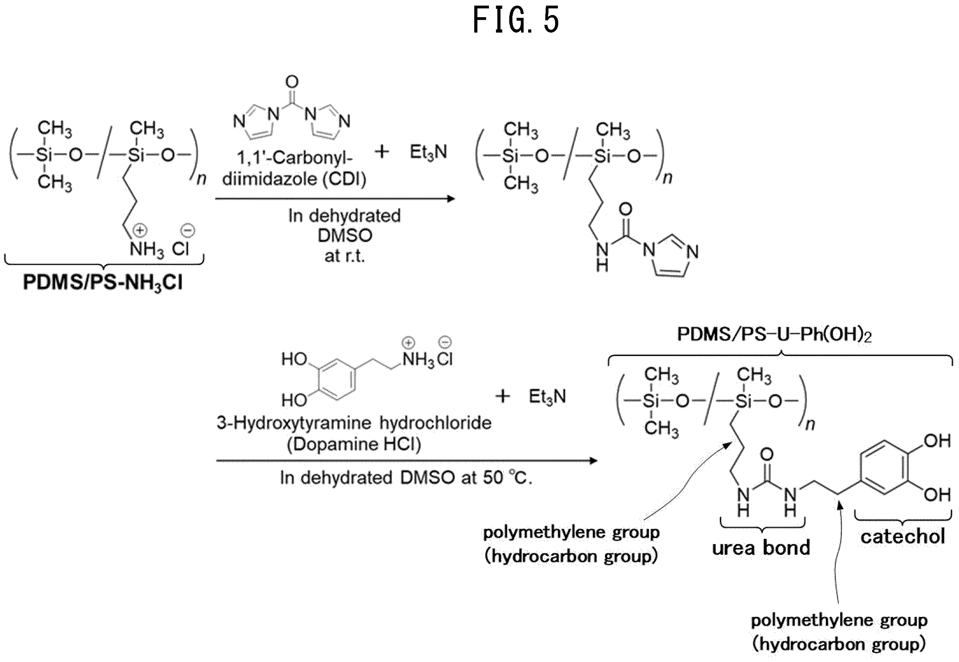

Hereinafter, Examples of the production method illustrated in FIG. 3 are described with reference to FIG. 4 and FIG. 5.

As illustrated in FIG. 4, a mixed product of dimethoxydimethylsilane (DMDMS) (MW = 120.22 g/mol, purity: 98%) and 3-aminopropyldimethoxymethylsilane (APDMMS) (MW = 163.2 g/mol, purity: 97%) was adopted as a starting material. The starting material, to which a catalyst was added, was stirred in 50% by weight of ethanol at 60°C for 12 hours. The catalyst here used includes APDMMS, an equivalent of concentrated hydrochloric acid (MW = 36.46 g/mol, purity: 35 to 37%), and 2 equivalents of water based on the total molar number of DMDMS and APDMMS. Next, the resulting mixed solution was transferred to a disposable tray made of polypropylene, and heated in an opened system at 50°C for about five hours, to thereby evaporate the solvent. Next, the resulting viscous solid product was heated in an oven at 100°C for two hours, to thereby obtain a copolymer (hereinafter, designated as "PDMS/PS-NH₃Cl").

Four kinds of PDMS/PS-NH₃Cl, different in mixing molar ratio of DMDMS: APDMMS (hereinafter, designated as "loading ratio"), were here obtained. Specifically, one where the loading ratio is 5:5 is adopted as Example 1, one where the loading ratio is 6:4 is adopted as Example 2, one where the loading ratio is 7:3 is adopted as Example 3, and one where the loading ratio is 8:2 is adopted as Example 4.

The foregoing step is one example of copolymerization step S1 illustrated in FIG. 3. A dimethylsiloxane unit constituting PDMS/PS-NH₃Cl, illustrated in FIG. 4, is one example of the above-mentioned second siloxane unit. A siloxane unit taken together with the dimethylsiloxane unit to constitute PDMS/PS-NH₃Cl is one example of the above-mentioned precursor first siloxane unit, and NH₃Cl constituting the substituent is one example of the compound containing an ammonium group.

The description is continued with reference to FIG. 5. Next, a mixture of PDMS/PS-NH₃Cl (5.0 mmol unit) dissolved in 5 mL of dehydrated DMSO (dimethylsulfoxide), 1.2 equivalents of 1,1'-carbonyldiimidazole (MW = 162.15 g/mol, purity: 97%) relative to an ammonium group, dissolved in 1.5 to 3 mL of dehydrated DMSO, and 1.2 equivalents of triethylamine (MW = 101.19 g/mol, purity: 99%) relative to an ammonium group, dissolved in 1.5 to 3 mL of dehydrated DMSO, was stirred at room temperature for 15 minutes, to thereby obtain a precursor polysiloxane composition.

The present step is one example of urea group formation step S2 illustrated in FIG. 3. The 1,1'-carbonyldiimidazole used in the present step is one example of the above-mentioned carbonyl compound. A structure where imidazole is connected to an amide bond, illustrated in FIG. 5, is one example of the above-mentioned compound containing a urea group -NH-CO-N<, as a whole. A siloxane unit containing the compound, in a substituent, is one example of the above-mentioned first siloxane unit.

Next, to a mixed solution including the precursor polysiloxane composition, a mixed solution of 2 equivalents of dopamine hydrochloride (MW = 189.64 g/mol, purity: 98%) relative to an ammonium group, dissolved in 2.5 to 5 mL of dehydrated DMSO, and 2 equivalents of triethylamine (MW = 101.19 g/mol, purity: 99%) relative to an ammonium group, dissolved in 2.5 to 5 mL of dehydrated DMSO was added and stirred at 50°C for two hours. Thereafter, a reaction solution was added to ethyl acetate (400 to 600 mL), and a white solid precipitated was recovered by suction filtration. Next, a crude product recovered was washed with purified water (20 to 40 mL), and an insoluble fraction was recovered by decantation, to thereby obtain a polysiloxane composition (hereinafter, designated as "PDMS/PS-U-Ph(OH)₂").

The present step is one example of catechol group introduction step S3 illustrated in FIG. 3. The dopamine hydrochloride used in the present step is one example of the above-mentioned catecholamine. The first siloxane unit undergoing the present step is one example of the adhesive monomer unit A illustrated in FIG. 1. The second siloxane unit undergoing the present step is one example of the flexible monomer unit B illustrated in FIG. 1.

According to the present step, the substituent R^{A2} illustrated in FIG. 1, of the adhesive monomer unit A, contains a catechol group that is in the state of being connected to a urea bond, as illustrated in FIG. 5. According to the present step, the substituent R^{A2} illustrated in FIG. 1 separately contains a hydrocarbon group of a structure of carbon atoms linearly connected, specifically, a polymethylene group, from such urea bond structure and catechol group, as illustrated in FIG. 5. More specifically, according to the present step, the substituent R^{A2} illustrated in FIG. 1 contains a trimethylene group (-CH₂CH₂CH₂-) that connects a silicon atom of the adhesive monomer unit A and such a urea bond structure, and an ethylene group (-CH₂CH₂-) that connects such urea bond structure and catechol group.

Here, PDMS/PS-U-Ph(OH)₂ obtained as described above is partially insolubilized when dried and stored, and thus was stored in the form of a solution obtained by dissolution in a solvent, specifically, an ethanol solution. The ethanol solution was concentrated (40°C) by a rotary evaporator, and then added to water, and a solid precipitated was used as an adhesive.

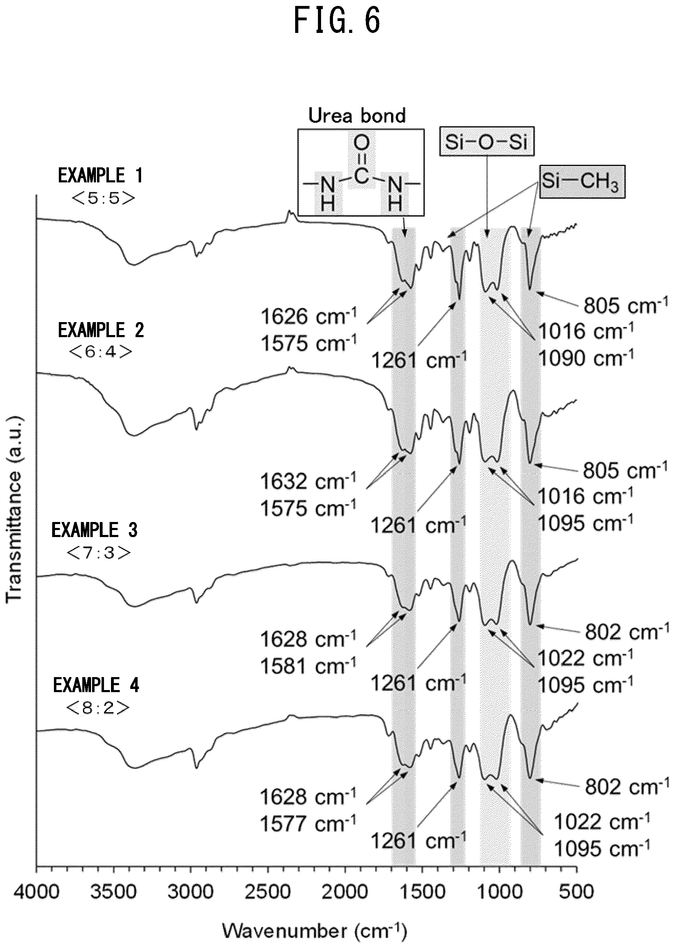

FIG. 6 illustrates an FT-IR spectrum of each PDMS/PS-U-Ph(OH)₂ according to Examples 1 to 4. As described above, the loading ratio of DMDMS: APDMMS in copolymerization step S1 differs among Examples 1 to 4. FIG. 6 indicates the loading ratio by brackets <>.

As illustrated in FIG. 6, an absorption peak assigned to a urea bond was observed around 1630 cm⁻¹ and around 1580 cm⁻¹ in each of Examples 1 to 4. Such observation indicates that a urea bond was properly formed in catechol group introduction step S3 described above.

In such each FT-IR spectrum, an absorption peak assigned to a siloxane bond, and an absorption peak assigned to a bond of a silicon atom in the siloxane unit and each methyl group as the substituents R^{A1}, R^{B1}, and R^{B2} illustrated in FIG. 1 were also confirmed.

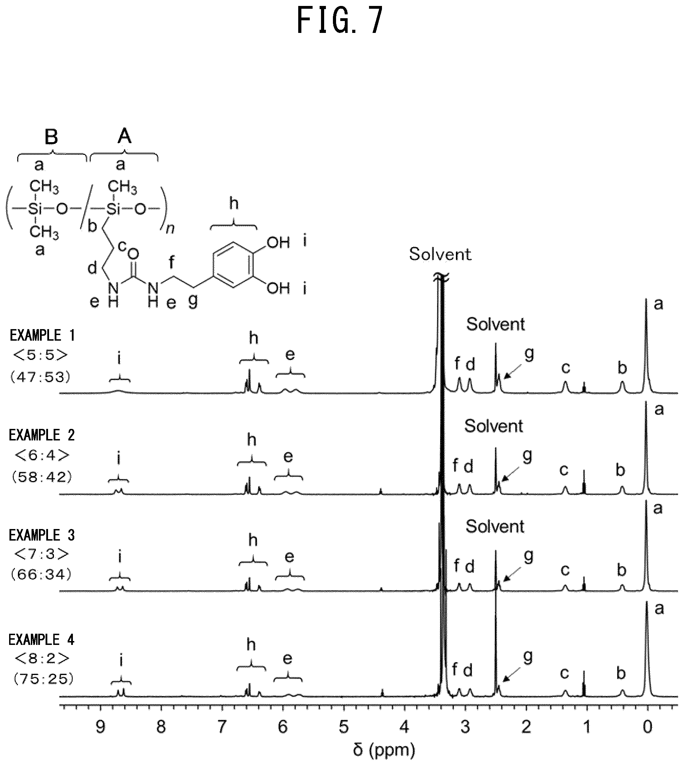

FIG. 7 illustrates a ¹H-NMR spectrum of each PDMS/PS-U-Ph(OH)₂ according to Examples 1 to 4. In such each ¹H-NMR spectrum, a signal h derived from an aromatic ring was observed. Thus, introduction of a catechol group into the adhesive monomer unit A was identified.

The molar ratio of flexible monomer unit B: adhesive monomer unit A (hereinafter, designated as "structural unit ratio") in PDMS/PS-U-Ph(OH)₂ was calculated from the integral ratio of a signal a derived from a methyl proton adjacent to a silicon atom and a signal h derived from an aromatic ring, in such each ¹H-NMR spectrum. FIG. 7 indicates the structural unit ratio calculated, by brackets (), and indicates the above-mentioned loading ratio by brackets <>. As illustrated in FIG. 7, the structural unit ratio of flexible monomer unit B: adhesive monomer unit A was almost the same as the loading ratio, in each of Examples 1 to 4.

Hereinafter, evaluation results in the case where PDMS/PS-U-Ph(OH)₂ according to Examples 1 to 4 was used as an adhesive, are described.

First, an ethanol solution of such each PDMS/PS-U-Ph(OH)₂ according to Examples 1 to 4 was prepared, and the ethanol solution was added to water, to thereby precipitate a paste. The paste was used as an adhesive, and an evaluation was conducted. The adhesive includes such each PDMS/PS-U-Ph(OH)₂, and thus the adhesive is also designated as "PDMS/PS-U-Ph(OH)₂" hereinafter.

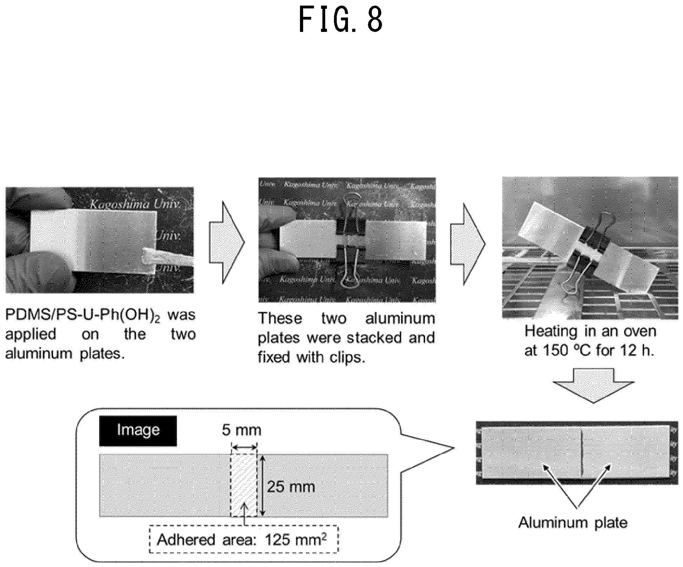

A creation procedure of a sample for evaluation is described with reference to FIG. 8. Paste-like PDMS/PS-U-Ph(OH)₂ was applied to each of paired aluminum plates. Here, such a paste was obtained by applying a powder, sandwiching the aluminum plates, and heating the powder, in each of Examples 1 and 2.

Next, regions of the paired aluminum plates, to which PDMS/PS-U-Ph(OH)₂ was applied, (hereinafter, referred to as "adhered surface"), were mutually stacked and fixed by clips, and heated and dried at 150°C for 12 hours. The area of the adhered surface was here 125 mm². Each sample for evaluation according to Examples 1 to 4 was thus obtained. PDMS/PS-NH₃Cl described above, as a precursor of PDMS/PS-U-Ph(OH)₂, was used as an adhesive for comparison, and each sample for evaluation according to Comparative Examples was also obtained in the same manner.

Such each sample for evaluation was subjected to a tensile shear test involving pulling and separating the paired aluminum plates in a direction in parallel with the adhered surface thereof at room temperature, and thus a stress-strain diagram was measured.

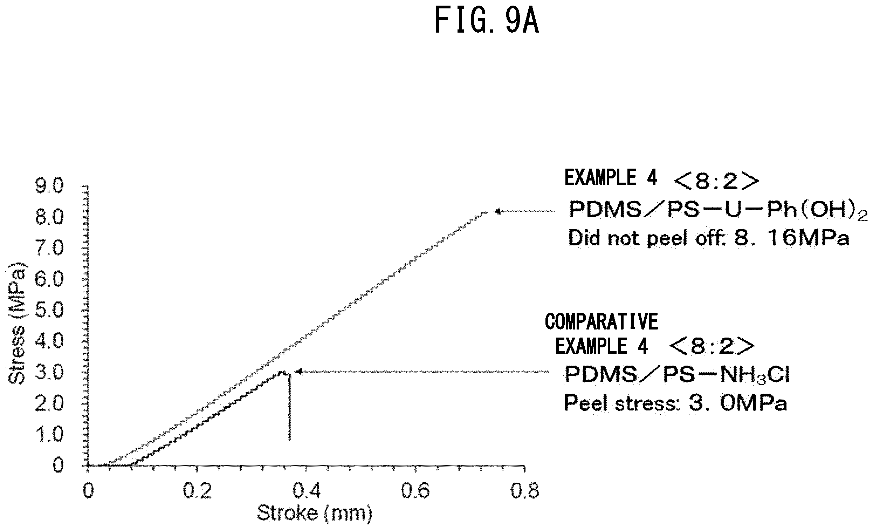

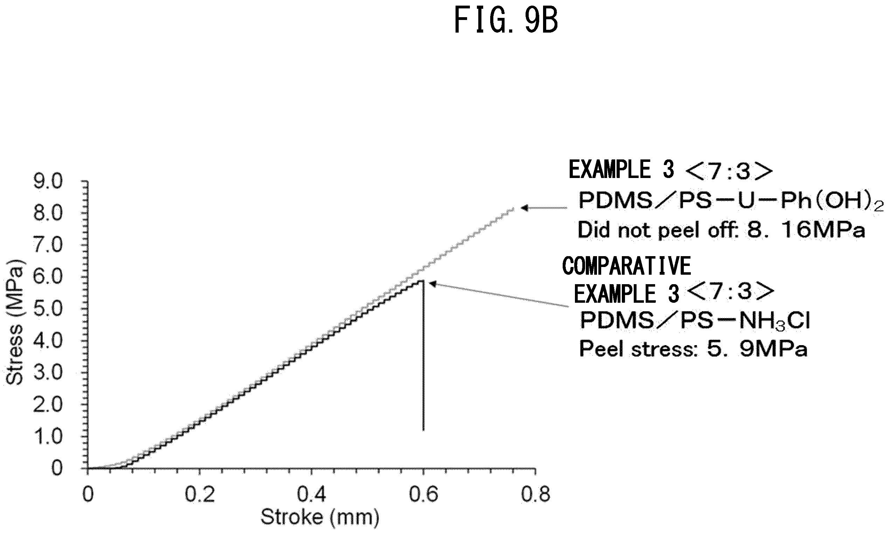

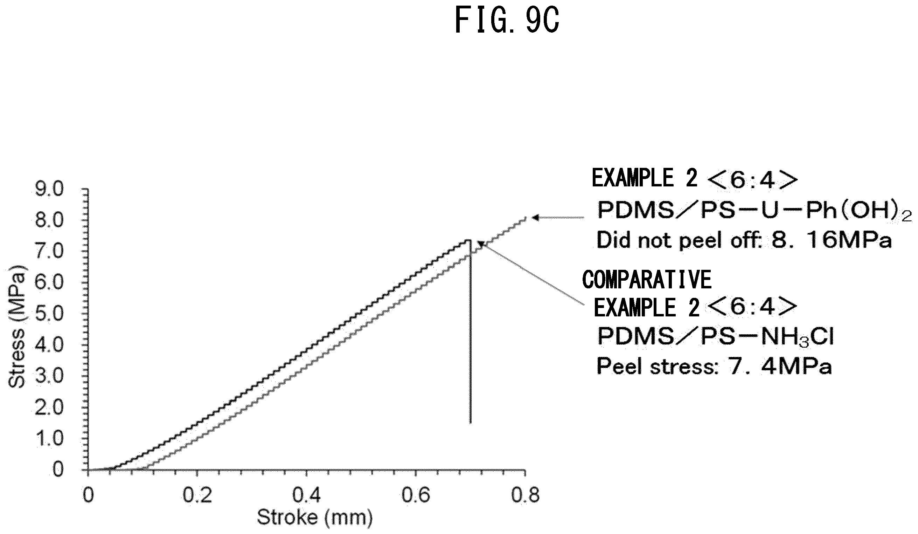

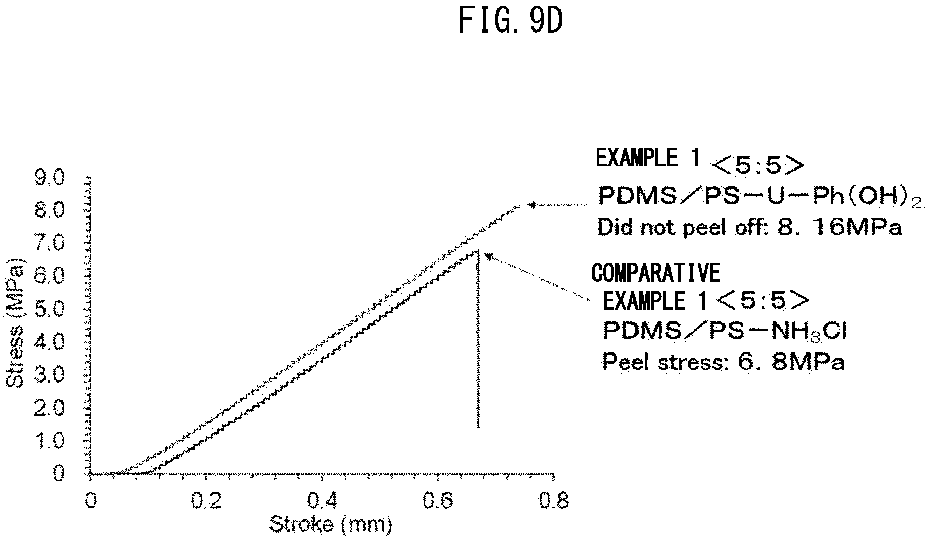

FIG. 9A, FIG. 9B, FIG. 9C, and FIG. 9D respectively illustrate stress-strain diagrams of samples for evaluation according to Example 4, Example 3, Example 2, and Example 1. In each of Examples 1 to 4, the adhered surface of the sample was not peeled even by pulling at 8.16 MPa corresponding to the maximum stress measurable with a tensile shear tester used, and strong adhesiveness was confirmed.

Conversely, the adhered surface of PDMS/PS-NH₃Cl (Comparative Example 4) where the loading ratio is 8:2 was confirmed to be peeled at 3.0 MPa, as illustrated in FIG. 9A. The adhered surface of PDMS/PS-NH₃Cl (Comparative Example 3) where the loading ratio is 7:3 was confirmed to be peeled at 5.9 MPa, as illustrated in FIG. 9B. The adhered surface of PDMS/PS-NH₃Cl (Comparative Example 2) where the loading ratio is 6:4 was confirmed to be peeled at 7.4 MPa, as illustrated in FIG. 9C. The adhered surface of PDMS/PS-NH₃Cl (Comparative Example 1) where the loading ratio is 5:5 was confirmed to be peeled at 6.8 MPa, as illustrated in FIG. 9D.

A main difference in chemical structure between each PDMS/PS-U-Ph(OH)₂ according to Examples 1 to 4 and each PDMS/PS-NH₃Cl according to Comparative Examples 1 to 4 is whether or not a catechol group is introduced. Thus, a catechol group was confirmed to contribute to exhibition of strong adhesiveness, from the results illustrated in FIG. 9A to FIG. 9D. As described above, each PDMS/PS-U-Ph(OH)₂ according to Examples 1 to 4 can realize adhesion excellent in shear strength.

Next, in order to confirm the shear stress in peeling of each of the samples for evaluation according to Examples 1 to 4, a stress-strain diagram was measured again with the area of the adhered surface of each of the samples for evaluation being reduced.

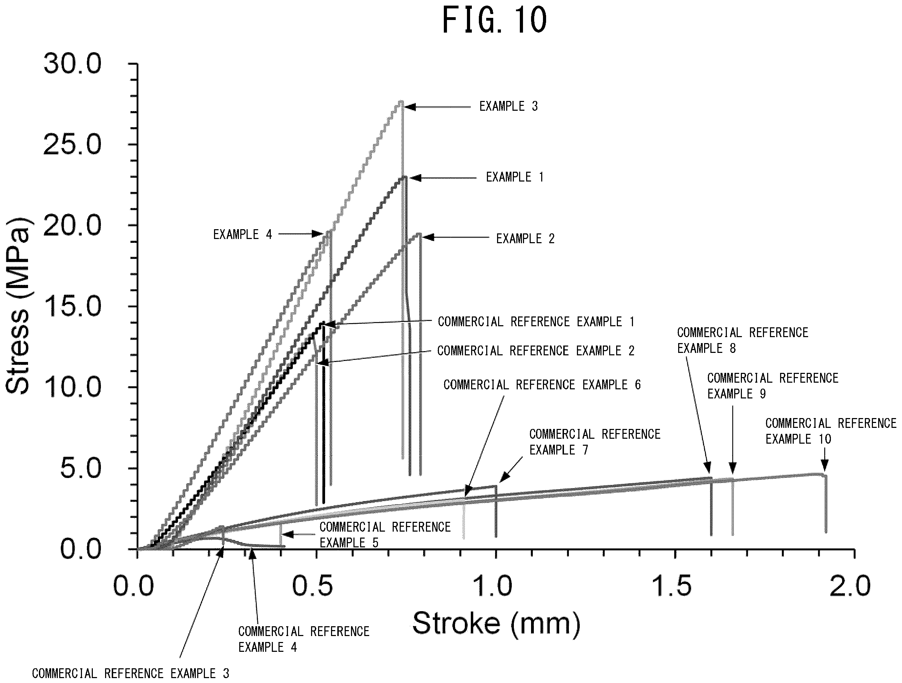

The results are illustrated in FIG. 10. The sample for evaluation of adhesion of the same materials according to Example 1 exhibited a shear strength of 23.0 MPa in the case of an area of the adhered surface of 40 mm². The sample for evaluation of adhesion of the same materials according to Example 2 exhibited a shear strength of 19.5 MPa in the case of an area of the adhered surface of 50 mm². The sample for evaluation of adhesion of the same materials according to Example 3 exhibited a shear strength of 27.7 MPa in the case of an area of the adhered surface of 31 mm². The sample for evaluation of adhesion of the same materials according to Example 4 exhibited a shear strength of 19.6 MPa in the case of an area of the adhered surface of 36 mm².

FIG. 10 also illustrates a stress-strain diagram of samples for evaluation, produced with commercially available adhesives, of Commercial Reference Examples 1 to 10.

The sample according to Commercial Reference Example 1 using a commercially available acrylic resin-based adhesive (two-component radical polymerization type) exhibited a shear strength of 14.0 MPa in the case of an area of the adhered surface of 40 mm².

The sample according to Commercial Reference Example 2 using a commercially available micro iron powder-containing epoxy-based adhesive (two-component addition reaction type) exhibited a shear strength of 13.4 MPa in the case of an area of the adhered surface of 48 mm².

The sample according to Commercial Reference Example 3 using a commercially available polyvinyl alcohol-based adhesive (aqueous solution dry solidification type) exhibited a shear strength of 1.4 MPa in the case of an area of the adhered surface of 125 mm².

The sample according to Commercial Reference Example 4 using a commercially available polyvinyl acetate -based adhesive (water dispersion dry solidification type) exhibited a shear strength of 0.7 MPa in the case of an area of the adhered surface of 125 mm².

The sample according to Commercial Reference Example 5 using a commercially available cyanoacrylate-based adhesive (moisture curing type) exhibited a shear strength of 1.6 MPa in the case of an area of the adhered surface of 125 mm².

The sample according to Commercial Reference Example 6 using a commercially available cyanoacrylate-based adhesive (moisture curing type) exhibited a shear strength of 3.1 MPa in the case of an area of the adhered surface of 125 mm².

The sample according to Commercial Reference Example 7 using a commercially available epoxy-based adhesive (two-component addition reaction type) exhibited a shear strength of 3.9 MPa in the case of an area of the adhered surface of 125 mm².

The sample according to Commercial Reference Example 8 using a commercially available cyanoacrylate-based adhesive (moisture curing type) exhibited a shear strength of 4.4 MPa in the case of an area of the adhered surface of 125 mm².

The sample according to Commercial Reference Example 9 using a commercially available cyanoacrylate-based adhesive (moisture curing type) exhibited a shear strength of 4.3 MPa in the case of an area of the adhered surface of 125 mm².

The sample according to Commercial Reference Example 10 using a commercially available vinyl acetate resin-based adhesive (heat-melt type) exhibited a shear strength of 4.6 MPa in the case of an area of the adhered surface of 125 mm².

As illustrated in FIG. 10, each of the samples for evaluation of adhesion of the same materials according to Examples 1 to 4 was confirmed to exhibit shear strength at ordinary temperature, the shear strength being more excellent than those according to Commercial Reference Examples 1 and 2 and much more excellent than those according to Commercial Reference Examples 3 to 10.

Next, applicability of an adhesive according to Example 3 with respect to adhesion of a glass fiber-reinforced epoxy resin was representatively examined. First, a sample for evaluation obtained by stacking a paired glass fiber-reinforced epoxy resin plates (hereinafter, referred to as "sample for glass fiber-reinforced epoxy resin adhesiveness evaluation") was produced with the adhesive according to Example 3 in the same manner as in the above-mentioned creation procedure of a sample for evaluation.

The area of the adhered surface was here 125 mm². The same tensile shear test as in the case of FIG. 9, the test involving pulling and separating the glass fiber-reinforced epoxy resin plates in a direction in parallel with the adhered surface thereof, was performed, and thus a stress-strain diagram was measured.

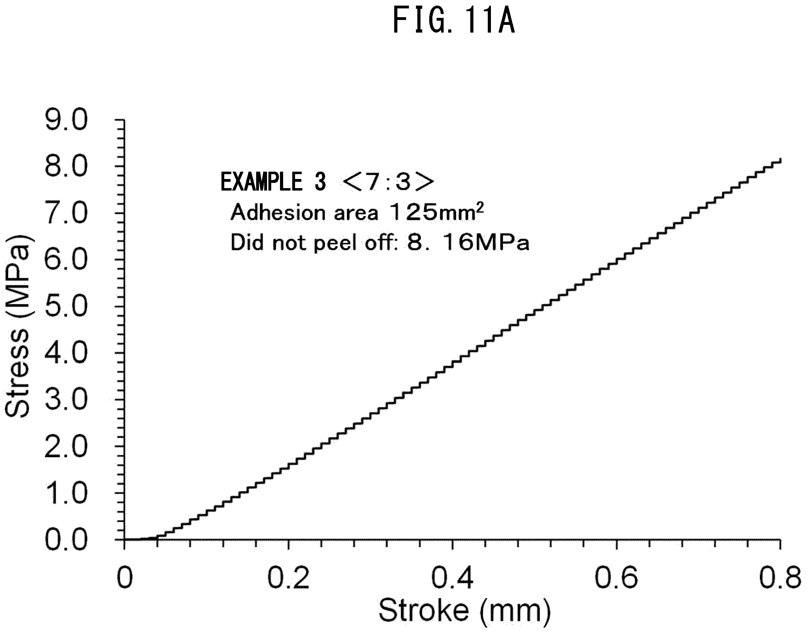

The results are illustrated in FIG. 11A. The adhered surface of the sample was not peeled even by pulling at 8.16 MPa corresponding to the maximum stress measurable with a tensile shear tester, and the adhesive according to Example 3 was confirmed to be applicable to adhesion of a glass fiber-reinforced epoxy resin. Such strong adhesiveness is considered to be exhibited by the presence of a PDMS component exhibiting flexibility, a catechol group exhibiting strong adhesiveness to a material surface, and a crosslinked structure of catechol groups, formed by heating and drying.

Next, in order to confirm the shear stress in peeling of the sample for glass fiber-reinforced epoxy resin adhesiveness evaluation according to Example 3, the area of the adhered surface was decreased to 53 mm², and then a stress-strain diagram was measured again.

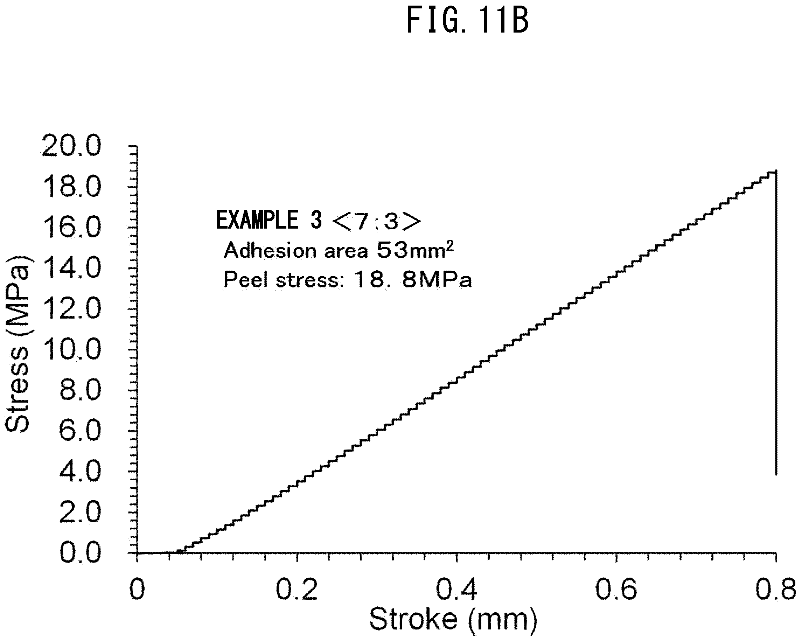

The results are illustrated in FIG. 11B. The stress in peeling of the adhered surface with the glass fiber-reinforced epoxy resin plates was 18.8 MPa, and strong adhesiveness was exhibited. A hydrogen bond between a hydrogen group on a glass fiber-reinforced epoxy resin surface, and a catechol group, is considered to contribute to strong adhesiveness.

Next, applicability of the adhesive according to Example 3 with respect to adhesion of copper was representatively examined. First, a sample for evaluation obtained by stacking paired copper plates whose surfaces are almost not oxidized (hereinafter, referred to as "sample for oxidatively unprocessed copper adhesiveness evaluation") was produced with the adhesive according to Example 3 in the same manner as in the above-mentioned creation procedure of a sample for evaluation.

A sample for evaluation obtained by stacking paired copper plates whose surfaces were subjected to oxidation processing (hereinafter, referred to as "sample for oxidatively processed copper adhesiveness evaluation") was similarly produced with the adhesive according to Example 3 in the same manner as in the above-mentioned creation procedure of a sample for evaluation. The oxidation processing was performed by heating the copper plates in the air at 150°C for 12 hours.

The area of the adhered surface was here 125 mm² in both the sample for oxidatively unprocessed copper adhesiveness evaluation and the sample for oxidatively processed copper adhesiveness evaluation. The samples were each subjected to the tensile shear test in the same manner as in the case of FIG. 9, and thus a stress-strain diagram was measured.

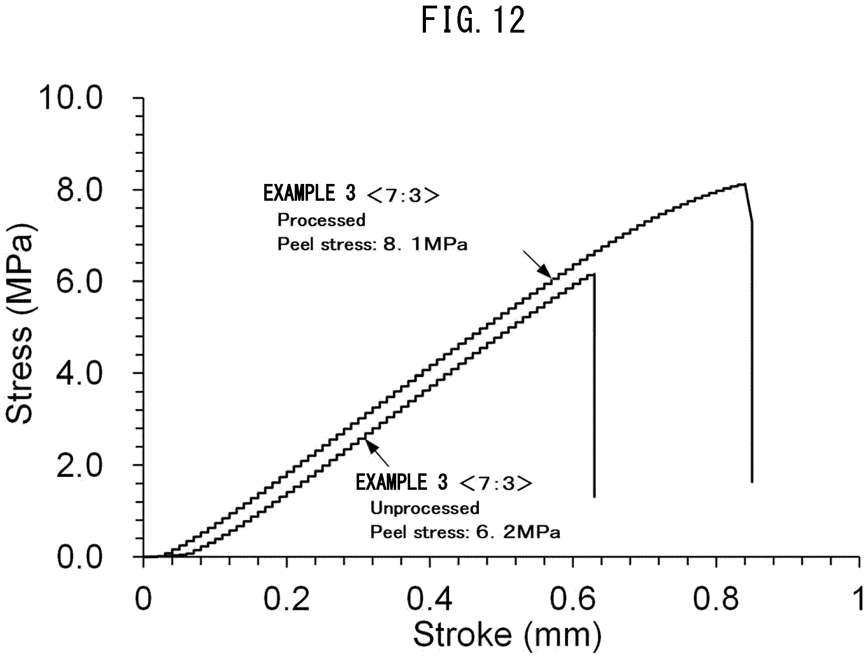

The results are illustrated in FIG. 12. The sample for oxidatively unprocessed copper adhesiveness evaluation exhibited a sufficient shear strength of 6.2 MPa. Thus, the adhesive according to Example 3 was confirmed to be applicable to adhesion of the copper plates.

The sample for oxidatively processed copper adhesiveness evaluation exhibited a large shear strength of 8.1 MPa. The reason for this is presumed that the copper plates were each subjected to oxidation processing to thereby allow a hydrogen bond and a coordination bond between copper oxide and a catechol group on the surface to contribute to strong adhesiveness. While copper oxide is here illustratively mentioned, the adhesives according to the present Examples 1 to 4 are each considered to be particularly suitable for adhesion of a common metal whose surface is oxidized, such as aluminum oxide.

Next, evaluation results of water resistance are described. The same sample as the above-mentioned sample for evaluation used in the measurement of the stress-strain diagram illustrated in FIG. 9 was examined with respect to water resistance. Specifically, the samples for evaluation according to Examples 1 to 4 and Commercial Reference Examples 1 and 2 were each immersed in water over two days, thereafter water was wiped off and a stress-strain diagram was immediately measured. The area of the adhered surface of each of the samples for evaluation was 125 mm².

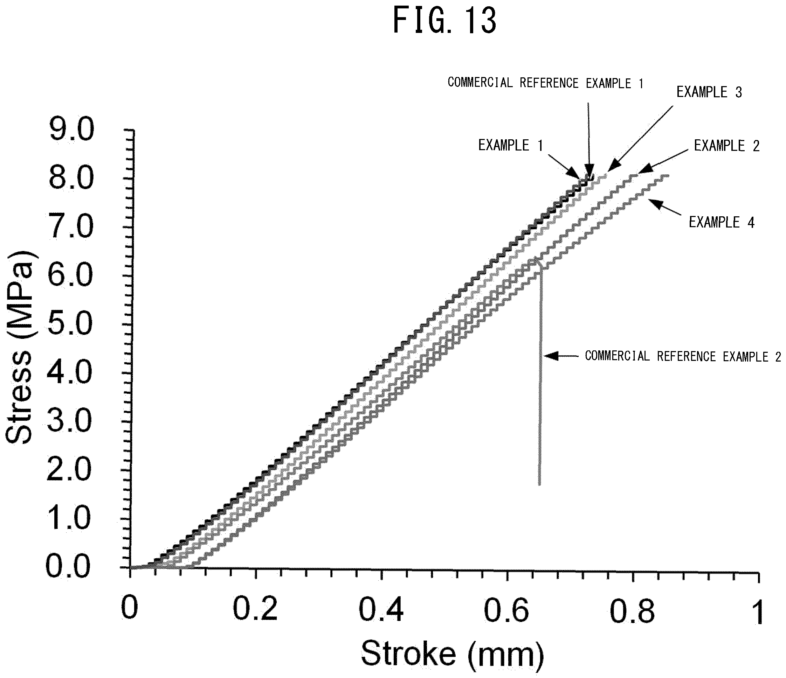

FIG. 13 illustrates evaluation results of water resistance. In each of Examples 1 to 4, no peeling of the adhered surface was caused even by pulling at 8.16 MPa corresponding to the maximum stress measurable with a tensile shear tester, and sufficient water resistance was confirmed.

Conversely, peeling of the adhered surface was confirmed at 6.5 MPa in Commercial Reference Example 2. Slight moisture was observed in an adhesive according to Commercial Reference Example 2, adhered on a peeled surface. In Commercial Reference Example 1, no peeling was caused during measurement, but the adhered surface was peeled when left to still stand with the stress being applied thereof for some time. An adhesive according to Commercial Reference Example 1, adhered on a peeled surface, was softened as compared with the material before immersion. Accordingly, the samples for evaluation according to Commercial Reference Examples 1 and 2 are each considered to be affected by water and then peeled.

Next, the same sample as the above-mentioned sample for evaluation used in the measurement of the stress-strain diagram illustrated in FIG. 9 was subjected to an impact resistance test. The results thereof are described.

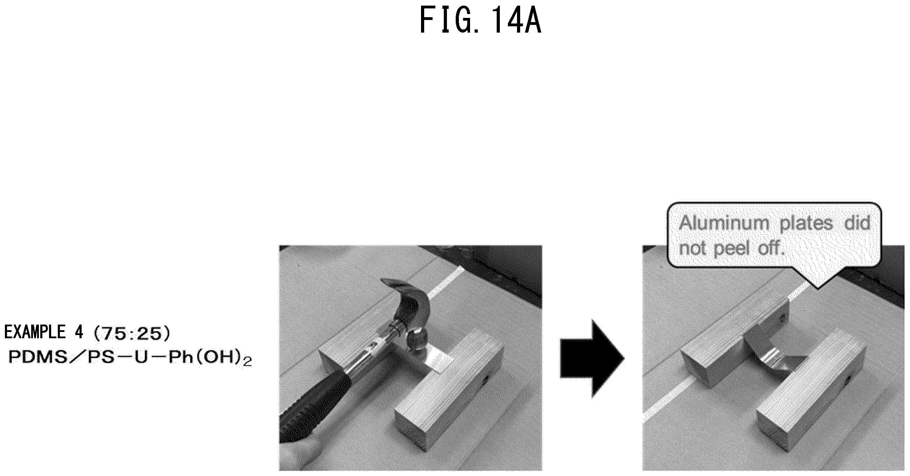

FIG. 14A illustrates a design of an impact resistance test of the sample for evaluation according to Example 4. As illustrated, the impact resistance test was performed by striking the sample for evaluation with a hammer in a direction perpendicular to the adhered surface. The adhered surface of the sample for evaluation according to Example 4 was not peeled even by such striking with a hammer, and the aluminum plates were confirmed to be deformed. The adhered surface was not confirmed to be peeled even by again striking the aluminum plates with a hammer.

The same results as in the case of Example 4 were obtained with respect to the samples for evaluation according to Examples 2 and 3, although not illustrated.

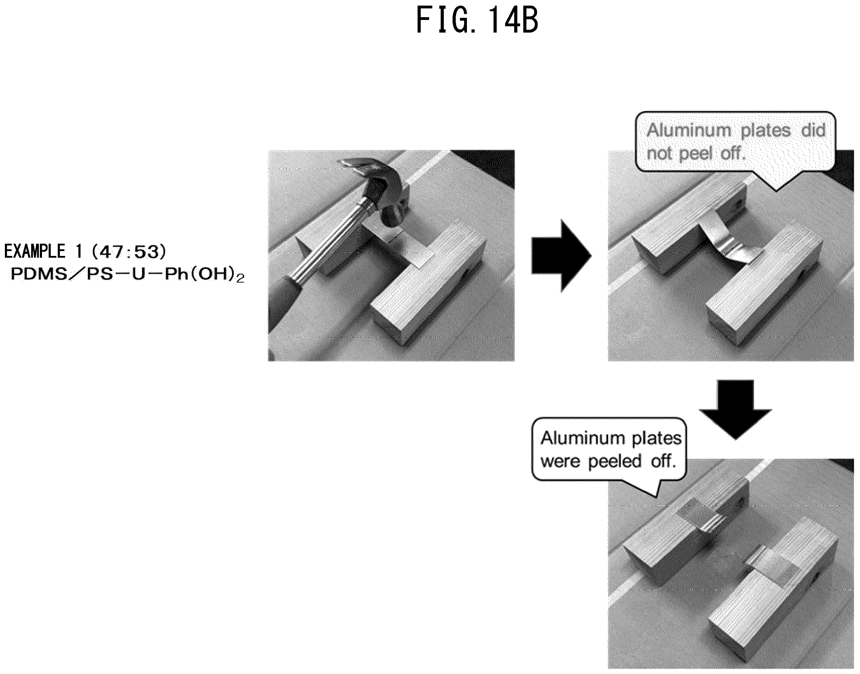

FIG. 14B illustrates a design of an impact resistance test of the sample for evaluation according to Example 1. The adhered surface of the sample for evaluation according to Example 1 was not peeled even by striking with a hammer once, and excellent impact resistance was exhibited as in the case of Example 4. As described above, each PDMS/PS-U-Ph(OH)₂ according to Examples 1 to 4 can realize adhesion excellent in impact resistance.

Herein, the adhered surface of the sample for evaluation according to Example 1 was peeled by again striking with a hammer, as illustrated in FIG. 14B. In other words, Example 1 exhibited excellent impact resistance, but exhibited inferior impact resistance as compared with Example 4. The difference between Example 1 and Example 4 is the proportion of the flexible monomer unit B in PDMS/PS-U-Ph(OH)₂.

In order to reveal the role of the flexible monomer unit B in PDMS/PS-U-Ph(OH)₂, a polysiloxane composition including a polymer of the adhesive monomer unit A among the adhesive monomer unit A and the flexible monomer unit B, was prepared in Comparative Example 5. The adhesive monomer unit A here used was a siloxane unit of a structure where a catechol group is bound to methylsiloxane via a urea bond as illustrated in FIG. 5.

The polysiloxane composition according to Comparative Example 5 (hereinafter, designated as "PS-U-Ph(OH)₂) was used as an adhesive to thereby obtain a sample for evaluation according to Comparative Example 5 in the same manner.

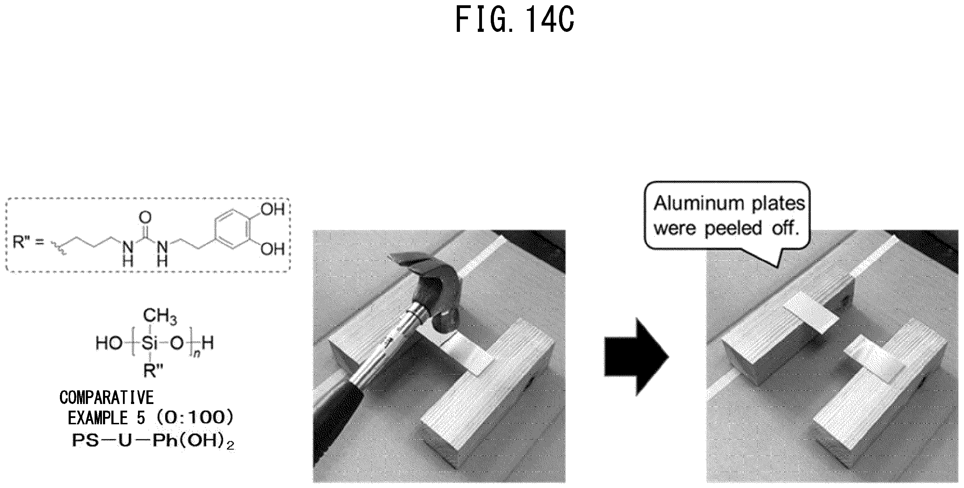

FIG. 14C illustrates a design of an impact resistance test of the sample for evaluation according to Comparative Example 5. The adhered surface of the sample for evaluation according to Comparative Example 5 was easily peeled by striking with a hammer once. In other words, the sample for evaluation according to Comparative Example 5 exhibited no sufficient impact resistance.

It is clear from the test results in FIG. 14A to FIG. 14C, described above, that, as the proportion of the flexible polymer unit B present in PDMS/PS-U-Ph(OH)₂ is lower, impact resistance of adhesion deteriorates. Conversely, the flexible polymer unit B was revealed to contribute to an enhancement in impact resistance in adhesion.

It can be said from the foregoing test results that the content rate of the flexible polymer unit B in PDMS/PS-U-Ph(OH)₂ is preferably 47% by mol or more, more preferably 58% by mol or more, more preferably 66% by mol or more, more preferably 75% by mol or more in order to obtain particularly excellent impact resistance.

Conversely, the content rate of the flexible polymer unit B is preferably 95% by mol or less, more preferably 90% by mol or less, more preferably 85% by mol or less, more preferably 80% by mol or less in order to sufficiently ensure the adhesive monomer unit A contributing to robust shear strength, in PDMS/PS-U-Ph(OH)₂.

Next, the same sample as the above-mentioned sample for evaluation used in the measurement of the stress-strain diagram illustrated in FIG. 9 was subjected to a heat resistance test. The results thereof are described.

Each of the samples for adhesion evaluation according to Examples 1 to 4 was heated in an oven with a weight of 5 kg being suspended therefrom. The heating temperature was gradually raised. The load of the weight acts as a shear force on the adhered surface of the paired aluminum plates during heating.

As a result, the adhesion of the paired aluminum plates was maintained in each of Examples 1 to 4, even at the temperature reaching 180°C. In other words, each of the samples for adhesion evaluation according to Examples 1 to 4 exhibited a heat resistance of 180°C. The reason for this is presumed that a crosslinking reaction of catechol groups progressed by heating and drying and a network structure was thus formed, and thus softening was moderately suppressed even at a relatively high temperature.

Next, in order to examine heat resistance in the case of use in adhesion of different materials, a sample for evaluation obtained by stacking a paired aluminum plates and a stainless plate (hereinafter, referred to as "sample for aluminum-stainless steel adhesiveness evaluation") was produced in the same manner as in the above-mentioned creation procedure of a sample for evaluation.

Each of the samples for aluminum-stainless steel adhesiveness evaluation according to Examples 1 to 4 was heated in an oven with a weight of 5 kg being suspended therefrom. The heating temperature was gradually raised to 150°C. As a result, the adhesion of each of the samples for aluminum-stainless steel adhesiveness evaluation according to Examples 1 to 4 was maintained. Furthermore, even when each of the samples was cooled to room temperature, the adhered surface was not peeled, and adhesiveness was confirmed to be able to be maintained in the environment in which the temperature changes in the range from room temperature to 150°C.

The reason for this is presumed that, while softening at a high temperature was suppressed by formation of a crosslinked structure of catechol components, thermal strain due to the difference in thermal expansion coefficient between different materials was made to be relaxed by flexibility of a PDMS component.

Next, applicability of each of the adhesives according to Examples 1 to 4, to adhesion of aluminum and glass, was examined. A sample for evaluation obtained by stacking paired aluminum plates and a glass plate (hereinafter, referred to as "sample for aluminum-glass adhesiveness evaluation") was produced with each of the adhesives according to Examples 1 to 4 in the same manner as in the above-mentioned creation procedure of a sample for evaluation.

Here, each of the samples for aluminum-glass adhesiveness evaluation exhibited adhesion of the aluminum plates and the glass plate at sufficient strength, and each of the adhesives according to Examples 1 to 4 was confirmed to be applicable to adhesion of the aluminum plates and the glass plate.

Furthermore, each of the samples for aluminum-glass adhesiveness evaluation according to Examples 1 to 4 was heated and dried, and then cooled to room temperature, and the adhesion state here was observed. As a result, no peeling of any adhered surface or no breakage of any glass plate was confirmed. Each of the adhesives according to Examples 1 to 4 was thus found to have a flexible structure where thermal strain due to the difference in thermal expansion coefficient, occurring by the change in temperature between different materials, can be relaxed.

### Embodiment 2

An adhesive having a structure illustrated in FIG. 2 can lead to the occurrence of a hydrogen bond between a hydroxy group of a catechol group and a hydroxy group of another catechol group. Such chemical binding of catechol groups constituting the adhesive causes deterioration in viscosity of the adhesive, resulting in shortening of the period for which the adhesive can be stored. The adhesive is here demanded to be able to be stably stored over a long period. Hereinafter, Embodiment 2 for further achieving the object is described.

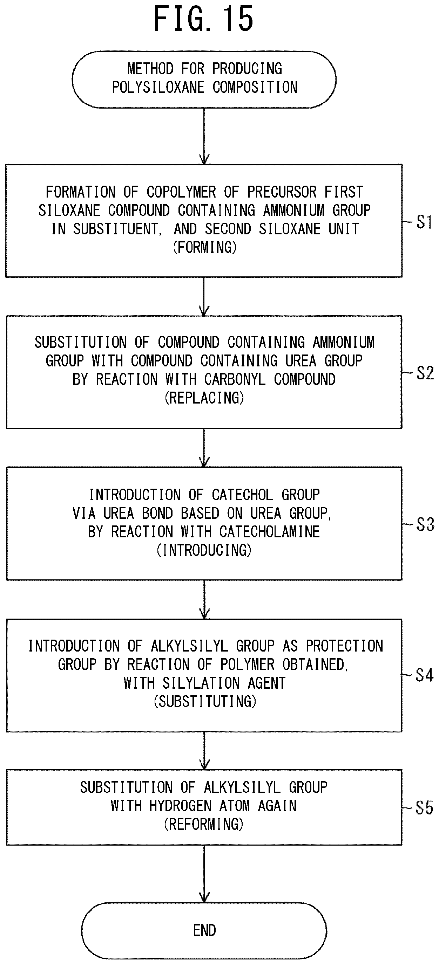

FIG. 15 illustrates a procedure of a method for producing a polysiloxane composition according to the present embodiment. Since copolymerization step S1, urea group formation step S2, and catechol group introduction step S3 are the same as in the case of Embodiment 1, the description overlapped is here omitted. Here, a catechol group introduced in catechol group introduction step S3 (hereinafter, designated as "non-protected catechol group") has a structure where two hydroxy groups are linked at the ortho positions of the benzene ring, as illustrated in FIG. 2 and FIG. 5.

In the present embodiment, a polymer obtained in catechol group introduction step S3 (hereinafter, designated as "non-protected polysiloxane composition") is reacted with a silylation agent (alkylsilyl group introduction step S4), after catechol group introduction step S3.

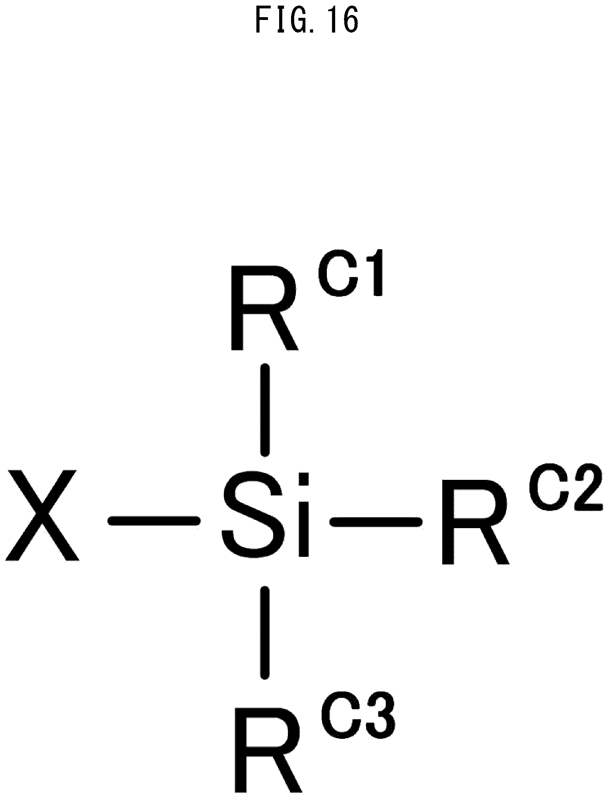

As illustrated in FIG. 16, the silylation agent here used can be a trialkylsilicon compound having a structure where three alkyl groups R^{C1}, R^{C2}, and R^{C3}, and any substituent X are bound to a silicon atom. The alkyl groups R^{C1}, R^{C2}, and R^{C3} may be the same as or different from one another, or one thereof may be different from the remaining two thereof.

Examples of the trialkylsilicon compound include trialkylalkoxysilane containing an alkoxy group as the substituent X, trialkylhalogenosilane containing a halogeno group as the substituent X, and silazane being other trialkylsilicon compound, containing a nitrogen-silicon bond as the substituent X. Examples of the trialkylhalogenosilane include trialkylchlorosilane containing a chloro group as the substituent X.

In alkylsilyl group introduction step S4 illustrated in FIG. 15, the non-protected polysiloxane composition is reacted with the silylation agent, to thereby substitute each hydrogen atom of two hydroxy groups linked at the ortho positions of the benzene ring in the non-protected catechol group, with an alkylsilyl group.

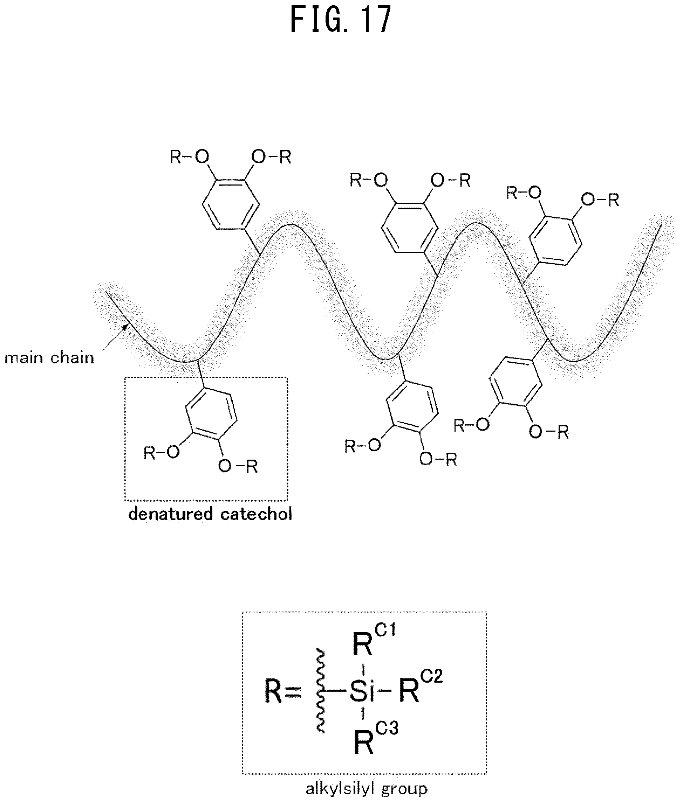

FIG. 17 illustrates a global structure of a polysiloxane composition obtained through alkylsilyl group introduction step S4 (hereinafter, designated as "protected polysiloxane composition"). The protected polysiloxane composition has a silylated structure where each hydrogen atom of hydroxy groups in the non-protected catechol group illustrated in FIG. 2 is substituted with an alkylsilyl group R.

Hereinafter, the non-protected catechol group, where such hydrogen atoms are thus each substituted with an alkylsilyl group, is particularly called "denatured catechol group".

The alkylsilyl group R serves as a protection group that suppresses chemical binding of such denatured catechol groups. Thus, the protected polysiloxane composition obtained through alkylsilyl group introduction step S4 hardly causes any time-dependent change that leads to a gradual increase in degree of viscosity, and can be stably stored over a long period.

The protected polysiloxane composition may also be used as a main component of the adhesive, as in the non-protected polysiloxane composition. Here, when the composition is used as the adhesive, the above-mentioned alkylsilyl group R as the protection group may be detached.

Returning to FIG. 15, the description is continued. In the present embodiment, the alkylsilyl group R as the protection group is detached after alkylsilyl group introduction step S4. In other words, the alkylsilyl group R as the protection group is again substituted with a hydrogen atom (alkylsilyl group detachment step S5). Thus, a structure where two hydroxy groups are linked at the ortho positions of the benzene ring is formed. In other words, the denatured catechol group is returned to the non-protected catechol group.

The procedure for substituting the protection group with a hydrogen atom is optionally performed. As one example, the protection group can be substituted with a hydrogen atom by hydrolysis of the protected polysiloxane composition under acidic conditions. As another example, the protection group can be substituted with a hydrogen atom by heating the protected polysiloxane composition.

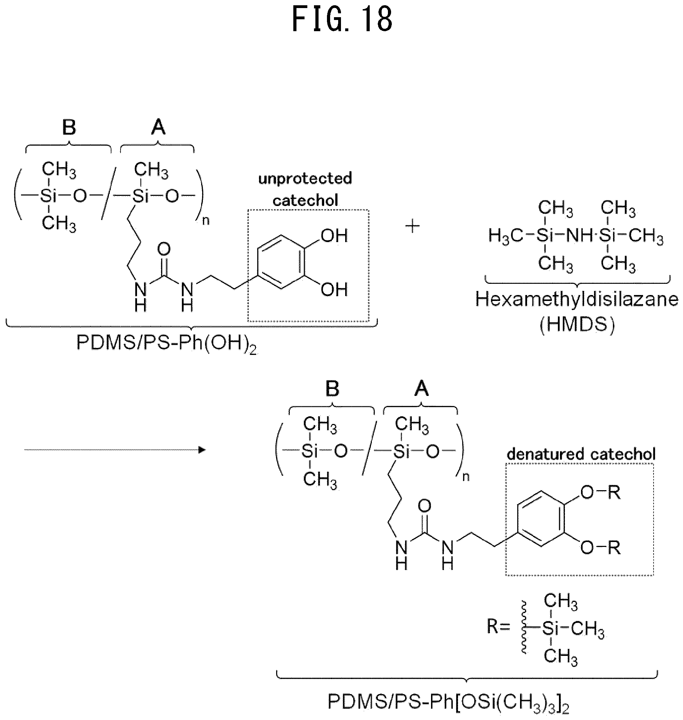

Hereinafter, Examples of the production method illustrated in FIG. 15 are described with reference to FIG. 18 to FIG. 20.

As illustrated in FIG. 18, PDMS/PS-U-Ph(OH)₂ according to Example 3 was prepared in the above-mentioned manner and was reacted with hexamethyldisilazane (HMDS). Specifically, first, 4.64 mmol (0.7485 g) of HMDS was added to 0.72 mmol unit (0.1048 g) of PDMS/PS-U-Ph(OH)₂ according to Example 3. The amount of HMDS added was adjusted so as to be 20 equivalents relative to the adhesive monomer unit A in PDMS/PS-U-Ph(OH)₂ according to Example 3.

Next, such PDMS/PS-U-Ph(OH)₂ and HMDS were stirred with a spatula for about 20 minutes, and were further stirred with a stirrer at room temperature for one hour. The stirred product was added to about 60 mL of hexane, and a precipitate was obtained by decantation. The precipitate is a protected polysiloxane composition according to Example 5.

The foregoing step is one example of alkylsilyl group introduction step S4 illustrated in FIG. 15. PDMS/PS-U-Ph(OH)₂ according to Example 3 is one example of the above-mentioned non-protected polysiloxane composition. HMDS is one example of the silylation agent illustrated in FIG. 16. HMDS contains a methyl group as each of the alkyl groups R^{C1}, R^{C2}, and R^{C3} illustrated in FIG. 16, and contains a trimethylsilicon compound containing a nitrogen-silicon bond, as the substituent X illustrated in FIG. 16.

As illustrated in FIG. 18, the protected polysiloxane composition according to Example 5, obtained as the precipitate, contains a denatured catechol group. The denatured catechol group has a silylated structure where each hydrogen atom of two hydroxy groups linked at the ortho positions of the benzene ring in the non-protected catechol group is substituted with a trimethylsilyl group as one example of the above-mentioned alkylsilyl group R. In FIG. 18, the protected polysiloxane composition according to Example 5 is designated as PDMS/PS-Ph[OSi(CH₃)₃]₂.

As above, substitution of each hydrogen atom of hydroxy groups in the non-protected catechol group with the alkylsilyl group R was found to enhance solubility in a solvent. Specifically, the protected polysiloxane composition according to Example 5 was dissolved in each of dimethylformamide, methanol, ethanol, acetone, ethyl acetate, chloroform, diethyl ether, and toluene, but the non-protected polysiloxane composition according to Example 3 was dissolved merely in each of dimethylformamide, methanol, and ethanol, among such solvents.

Here, the protected polysiloxane composition according to Example 5 was hardly dissolved in dimethylsulfoxide, but the non-protected polysiloxane composition according to Example 3 was dissolved in dimethylsulfoxide.

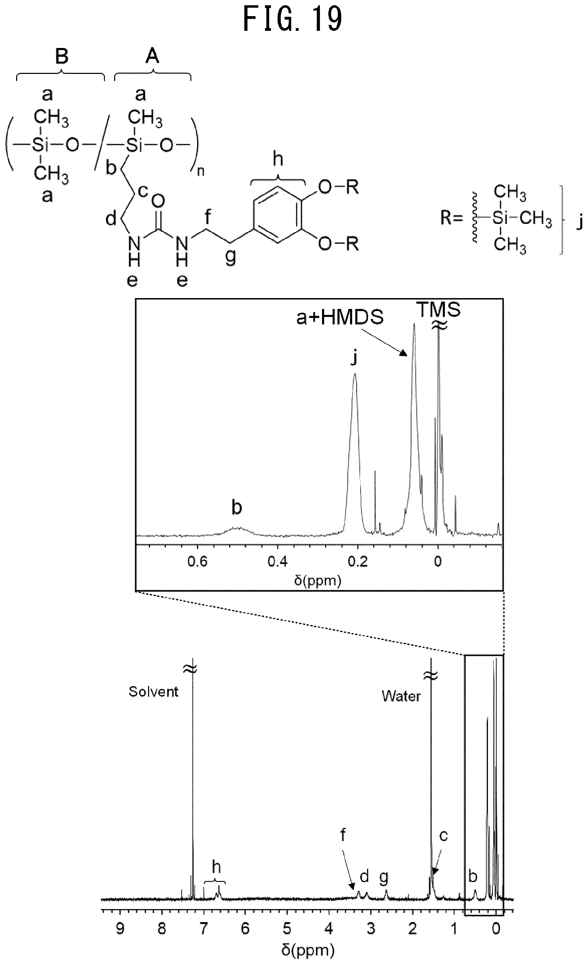

FIG. 19 illustrates a ¹H-NMR spectrum of the protected polysiloxane composition according to Example 5. A signal j derived from a methyl proton of the trimethylsilyl group as the alkylsilyl group R is observed in the ¹H-NMR spectrum illustrated in FIG. 19. A signal i derived from a hydroxy group of the non-protected catechol group is observed in the ¹H-NMR spectrum illustrated in FIG. 7, but the signal i is not confirmed in the ¹H-NMR spectrum illustrated in FIG. 19. This fact supposes sure substitution of each hydrogen atom of hydroxy groups in the non-protected catechol group, with the trimethylsilyl group.

In the adhesive monomer unit A, a silicon atom and a urea bond structure are connected by a backbone including a plurality of carbon atoms. The rate of introduction of the trimethylsilyl group as the alkylsilyl group R was calculated from the integrated value of a signal b derived from a carbon atom directly bound to a silicon atom, among carbon atoms constituting the backbone, and the integrated value of the above-mentioned signal j, and thus was 99%.

This means that 99% of hydroxy groups present in the non-protected catechol group were each substituted with the trimethylsilyl group. Here, the fact that no signal i derived from a hydroxy group can be confirmed from the ¹H-NMR spectrum illustrated in FIG. 19 indicates the absence of the non-protected catechol group in the protected polysiloxane composition according to Example 5, and thus a rate of introduction of substantially 100% is considered to be achieved.

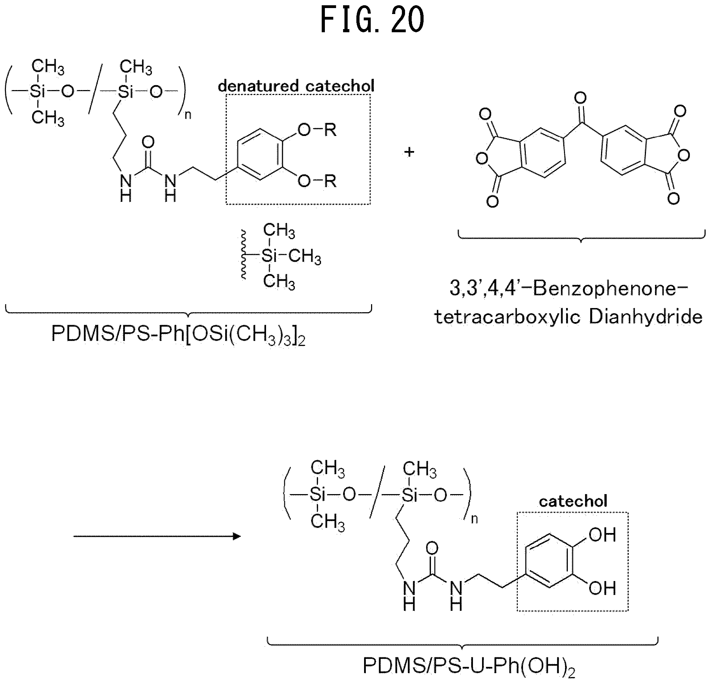

The description is continued with reference to FIG. 20. Next, the trimethylsilyl group serving as the protection group was detached from the protected polysiloxane composition according to Example 5, with the view to an enhancement in adhesion force during use as the adhesive. The present step is one example of alkylsilyl group detachment step S5 illustrated in FIG. 15.

Specifically, a solution of 1.7 mg of acid anhydride, specifically, 3,3',4,4'-benzophenonetetracarboxylic acid dianhydride dissolved in 1 mL of acetone was added to and mixed with a solution of 57.0 mg of the protected polysiloxane composition according to Example 5 dissolved in 1 mL of acetone, to thereby generate an acid. The amount of acid anhydride added was 3% by weight in terms of the outer percentage based on 100% by weight of the protected polysiloxane composition according to Example 5.

Hydrolysis occurs under acidic conditions where an acid is thus generated, and the hydrolysis allows the trimethylsilyl group in the protected polysiloxane composition according to Example 5 to be substituted with a hydrogen atom. In other words, a structure is reformed where two hydroxy groups are linked at the ortho positions of the benzene ring.

Hereinafter, the protected polysiloxane composition, where the denatured catechol group is thus returned to the non-protected catechol group, is called "deprotected polysiloxane composition". A deprotected polysiloxane composition according to Example 5 is here obtained by evaporating acetone as the above-mentioned solvent.

Hereinafter, evaluation results of adhesion properties of the protected polysiloxane composition and the deprotected polysiloxane composition according to Example 5 are described.

An evaluation sample including paired aluminum plates stacked with the protected polysiloxane composition according to Example 5 was produced in the manner described with reference to FIG. 8. The evaluation sample was subjected to the tensile shear test, and a sufficient shear strength of 10.7 MPa was exhibited in the case of an area of the adhered surface of 78 mm². Thus, the protected polysiloxane composition according to Example 5 was found to be sufficiently usable as the adhesive even if not necessarily being co-existed with acid anhydride.

In this regard, an evaluation sample including paired aluminum plates stacked with the deprotected polysiloxane composition according to Example 5 was produced in the same manner. The evaluation sample was subjected to the tensile shear test, and a sufficient shear strength of 10.9 MPa was exhibited even in the case of a decrease in area of the adhered surface, to 61 mm². It was confirmed from these results that adhesion force can be enhanced by promotion of detachment of the protection group due to co-existence with acid anhydride during use as the adhesive.

While detachment of the protection group was promoted due to co-existence of the protected polysiloxane composition with acid anhydride in Example 5 described above, the procedure for detaching the protection group was optionally performed as described with reference to FIG. 15. Hereinafter, a variation example of the procedure for detaching the protection group is described.

In order to confirm the detachment of the protection group with no use of any acid anhydride, but heating, the protected polysiloxane composition according to Example 5 was dissolved in dimethylformamide as a solvent, and was stirred over one hour with the composition being heated to 150°C that is the same temperature as in adhesion. Thereafter, a deprotected polysiloxane composition according to a variation example was obtained by removal of the solvent.

A ¹H-NMR spectrum of the deprotected polysiloxane composition according to the variation example was measured, and a decrease in area of a signal j derived from a methyl proton of the trimethylsilyl group as the alkylsilyl group R, and an increase in area of a signal i derived from a hydroxy group of the non-protected catechol group were observed as compared with the ¹H-NMR spectrum illustrated in FIG. 19. In other words, the denatured catechol group was confirmed to be able to be returned to the non-protected catechol group with no use of any acid anhydride, but heating at 150°C.

### Embodiment 3

Next, the viscosity as an index of ease of application of the adhesive to a subject is described.

As described with reference to FIG. 9A to FIG. 9D, a catechol group contributes to exhibition of adhesiveness. Thus, a higher content rate of the adhesive monomer unit A can be said to be more advantageous for an increase in adhesion force of the adhesive. In this regard, according to studies by the inventors of the present application, a higher content rate of the flexible monomer unit B results in a lower degree of viscosity of the adhesive at ordinary temperature. Thus, a higher content rate of the flexible monomer unit B is more advantageous for an enhancement in each of application to a subject.

There is a demand to achieve the balance between obtaining a sufficient adhesion force and enhancing ease of application. The balance is conveniently achieved when the content rate of the flexible monomer unit B in the adhesive can be easily adjusted. Hereinafter, an embodiment therefor is described.

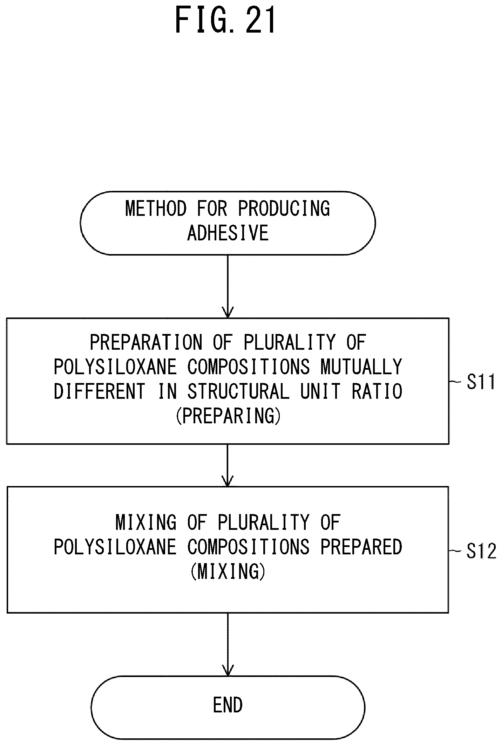

As illustrated in FIG. 21, in the present embodiment, a plurality of polysiloxane compositions is first prepared, the compositions being different from each other in terms of the above-mentioned structural unit ratio (preparation step S11). Such a plurality of polysiloxane compositions is mixed to thereby obtain the adhesive as a mixture of such a plurality of polysiloxane compositions (mixing step S12).

According to the present procedure, a polysiloxane composition containing a relatively higher content rate of the flexible monomer unit B, among the plurality of polysiloxane compositions prepared in preparation step S11, serves as a thinner. Specifically, when a first polysiloxane composition and a second polysiloxane composition lower in content rate of the flexible monomer unit B than the first polysiloxane composition are mixed in mixing step S12, the first polysiloxane composition serves as a thinner that reduces the degree of viscosity of the second polysiloxane composition. Thus, the degree of viscosity of an adhesive to be obtained can be easily adjusted by the mixing ratio of the first polysiloxane composition and the second polysiloxane composition.

Hereinafter, a specific example of the production method illustrated in FIG. 21 is described.

First, PDMS/PS-U-Ph(OH)₂ according to Example 6 was produced as the first polysiloxane composition serving as the thinner, in the same manner as in Examples 1 to 4 except that the loading ratio of DMDMS: APDMMS is 19:1.

In copolymerization step S1 according to Example 6, upon heating a mixed solution including DMDMS, APDMMS, a catalyst, and a solvent in order to evaporate the solvent from the mixed solution, the area of a liquid surface of the mixed solution was set to be smaller than those in Examples 1 to 4. The reason for this is to suppress volatilization of a cyclic oligomer contributing to formation of the flexible monomer unit B.

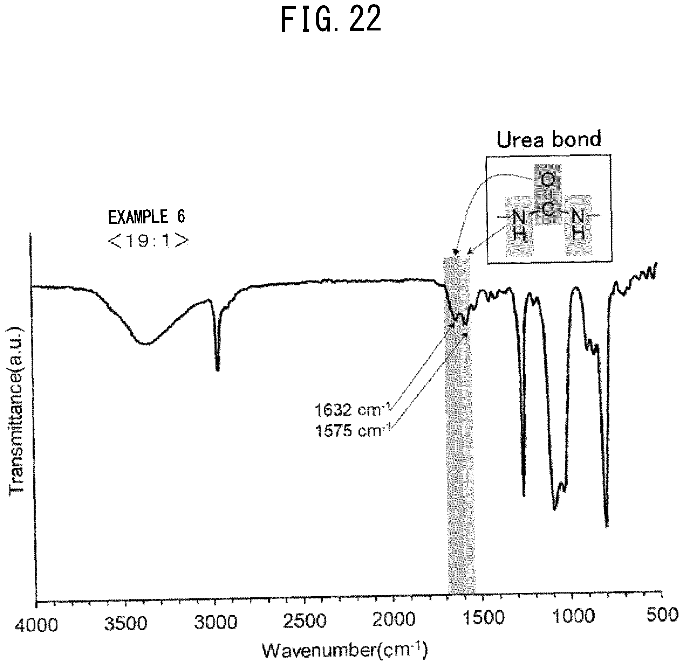

FIG. 22 illustrates an FT-IR spectrum of PDMS/PS-U-Ph(OH)₂ according to Example 6. Also in Example 6, an absorption peak assigned to a urea bond was observed at positions of a wavenumber of 1632 cm⁻¹ and a wavenumber of 1575 cm⁻¹, and a urea bond was confirmed to be properly formed in catechol group introduction step S3 described above.

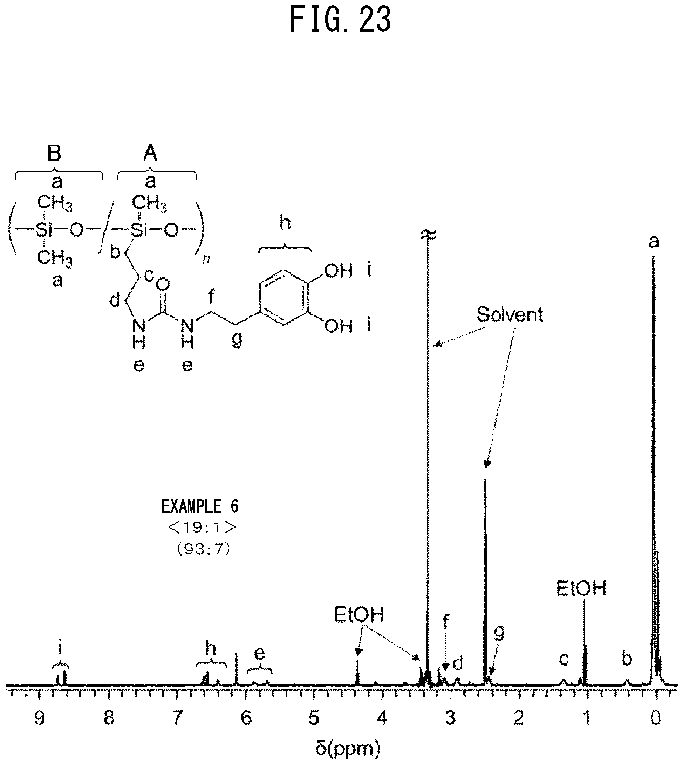

FIG. 23 illustrates a ¹H-NMR spectrum of PDMS/PS-U-Ph(OH)₂ according to Example 6. In the ¹H-NMR spectrum, a signal h derived from an aromatic ring was observed. Thus, introduction of a catechol group into the adhesive monomer unit A was identified. The structural unit ratio as the molar ratio of flexible monomer unit B: adhesive monomer unit A in PDMS/PS-U-Ph(OH)₂ was calculated from the integral ratio of a signal a derived from a methyl proton adjacent to a silicon atom and a signal h derived from an aromatic ring in the ¹H-NMR spectrum, and was found to be 93:7. FIG. 23 indicates the structural unit ratio by brackets (), and indicates the above-mentioned loading ratio by brackets <>.

Conversely, PDMS/PS-U-Ph(OH)₂ according to Example 3, described above, was prepared as the second polysiloxane composition. PDMS/PS-U-Ph(OH)₂ according to Example 6, as the first polysiloxane composition, and PDMS/PS-U-Ph(OH)₂ according to Example 3, as the second polysiloxane composition were then mixed under a condition where the mass ratio of first polysiloxane composition: second polysiloxane composition is 1:3, and thus an adhesive according to Example was obtained.

Specifically, first, one obtained by weighing PDMS/PS-U-Ph(OH)₂ according to Example 6 and PDMS/PS-U-Ph(OH)₂ according to Example 3 at a mass ratio of 1:3 and dissolving them in ethanol was mixed, and thus a mixed solution was produced. Next, the mixed solution was concentrated by a rotary evaporator, and then was added to water while stirring, and thus the adhesive according to Example was precipitated.

Hereinafter, evaluation results of adhesion properties of the adhesive according to the present Example are described.

An evaluation sample including paired aluminum plates stacked with the adhesive according to the present Example was produced in the manner described with reference to FIG. 8. The evaluation sample was subjected to the tensile shear test, and the adhered surface of the evaluation sample was not peeled and strong adhesiveness was confirmed even by pulling at 8.16 MPa corresponding to the maximum stress measurable with a tensile shear tester used, as in the cases of Examples 1 to 4. When the area of the adhered surface was 61 mm² in order to confirm the shear stress in peeling of the adhered surface, a sufficient shear strength of 9.6 MPa was exhibited.

The relevant evaluation sample was subjected to the impact resistance test in the manner described with reference to FIG. 14A and FIG. 14B. The relevant evaluation sample caused no peeling of the adhered surface even by striking with a hammer, and was confirmed to exhibit excellent impact resistance.

The relevant evaluation sample was subjected to the above heat resistance test. Adhesion of the relevant evaluation sample with a load of a weight of 5 kg being applied as a shear force onto the adhered surface, was maintained even at 250°C. In other words, a heat resistance of 250°C was confirmed.

The above-mentioned sample for aluminum-stainless steel adhesiveness evaluation was produced with the adhesive according to the present Example. Adhesion of the sample for aluminum-stainless steel adhesiveness evaluation was maintained even when it is heated to 150°C with a load of a weight of 5 kg being applied as a shear force onto the adhered surface, and was maintained even after it is cooled to room temperature, as in the cases of Examples 1 to 4.

Next, the evaluation results of ease of application of the adhesive according to the present Example are described.

PDMS/PS-U-Ph(OH)₂ according to Example 3, as the second polysiloxane composition, was in the form of a hard paste. Conversely, PDMS/PS-U-Ph(OH)₂ according to Example 6, as the first polysiloxane composition, was in the form of a liquid. The adhesive according to the present Example, as the mixture of both, was in the form of a soft paste.

The ease of application of the adhesive according to the present Example to a plate-shaped subject was confirmed to be certainly enhanced as compared with the case of PDMS/PS-U-Ph(OH)₂ according to Example 3, as the second polysiloxane composition. The reason for this is because the first polysiloxane composition served as a thinner that reduces the degree of viscosity of the second polysiloxane composition.

The mass ratio of first polysiloxane composition: second polysiloxane composition, being 1:3, corresponds to 34:66 when converted into the molar ratio of the monomer units. Thus, the molar ratio of flexible monomer unit B: adhesive monomer unit A in the adhesive according to the present Example satisfies (93 × 34 + 66 × 66): (7 × 34 + 34 × 66) ≈ 75:25.

The value of the molar ratio is approximate to a structural unit ratio of 75:25 in PDMS/PS-U-Ph(OH)₂ according to Example 4. However, the ease of application of the adhesive according to the present Example, at room temperature, was confirmed to be more excellent than the ease of application of PDMS/PS-U-Ph(OH)₂ according to Example 4, at room temperature.

In other words, in the case of the same molar ratio of flexible monomer unit B: adhesive monomer unit A, an adhesive obtained by mixing a plurality of polysiloxane compositions mutually different in structural unit ratio was found to be able to be more enhanced in ease of application than an adhesive including one polysiloxane composition.

The foregoing exemplarily describes the case where the content rate of the flexible monomer unit B in the adhesive as the mixture is 75% by mol. The content rate of the flexible monomer unit B is not limited to this value, and can be optionally adjusted by the mixing ratio of the first polysiloxane composition and the second polysiloxane composition. The content rate of the flexible monomer unit B in the adhesive as the mixture is preferably 47% by mol or more and 95% by mol or less in order to achieve the balance between obtaining a sufficient adhesion force and enhancing ease of application.

While a production method involving mixing the first polysiloxane composition and the second polysiloxane composition is exemplified in the above Example, a third polysiloxane composition different in structural unit ratio from the first polysiloxane composition and the second polysiloxane composition may be further mixed in addition to the first polysiloxane composition and the second polysiloxane composition, or four or more polysiloxane compositions mutually different in structural unit ratio may be mixed.

When such a plurality of polysiloxane compositions mutually different in structural unit ratio is mixed, at least any of such a plurality of polysiloxane compositions may be the above-mentioned deprotected polysiloxane composition. As described above, the protected polysiloxane composition can also be used as the adhesive, and thus at least any of such a plurality of polysiloxane compositions may also be a protected polysiloxane composition whose non-protected catechol group is replaced with a denatured catechol group.

Hereinafter, adhesives according to Comparative Examples are described.

In the above Examples, when the adhesive as the mixture is obtained, the first polysiloxane composition, where the content rate of the adhesive monomer unit A is suppressed to 7% by mol, was used as a thinner in order to reduce the degree of viscosity. As described above, there is observed a tendency to reduce the degree of viscosity of the resulting polysiloxane composition according to a lower content rate of the adhesive monomer unit A.

Preparation of an adhesive was attempted with as a thinner, a silicone oil containing no catechol group, in order to examine whether or not a polysiloxane where the content rate of the adhesive monomer unit A is suppressed to 0% by mol can serve as the thinner.

Specifically, a product obtained by mixing the silicone oil and PDMS/PS-U-Ph(OH)₂ according to Example 3, as the second polysiloxane composition, in a condition of a mass ratio of silicone oil: second polysiloxane composition of 1:3, was dissolved in ethanol, and was added to water. As a result, the silicone oil and PDMS/PS-U-Ph(OH)₂ were not compatible, and were precipitated with both being separated from each other. In other words, the silicone oil containing no catechol group could not serve as a thinner for PDMS/PS-U-Ph(OH)₂.

From the result, the first polysiloxane composition is required to contain the adhesive monomer unit A even in a slight amount in order that the first polysiloxane composition is compatible with the second polysiloxane composition to thereby serve as a thinner for the second polysiloxane composition.

As one example, a polysiloxane composition having a content rate of the adhesive monomer unit A of more than 0% by mol and 10% by mol or less can be used as a thinner for another polysiloxane composition having a content rate of the adhesive monomer unit A of more than 10% by mol.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2021-66515, filed on April 9, 2021, the entire disclosure of which is incorporated by reference herein.

### Industrial Applicability

The adhesive according to the present disclosure can be used in, for example, adhesion of a location demanded to have shear strength and impact resistance. As one specific example, the adhesive according to the present disclosure can be used in adhesion of members constituting an automobile. A cured product of the adhesive according to the present disclosure has shear strength and impact resistance, and thus can stably keep a robust adhesion structure even if an impact load according to vibration or impact is applied during driving of an automobile.

The adhesive according to the present disclosure can also be used in adhesion of different materials. Thus, a multi-material structure can be realized where different materials are well-placed. In particular, the adhesive is suitable for adhesion of any two materials selected from the group consisting of aluminum, stainless steel, copper, glass, and an epoxy resin. Such a multi-material structure contributes to weight saving of automobiles and transport planes such as airplanes.

## Claims

1. A polysiloxane composition that is a copolymer of
an adhesive monomer unit comprising an organosiloxane unit containing a substituent containing a catechol group, and
a flexible monomer unit comprising an organosiloxane unit containing no catechol group.

2. The polysiloxane composition according to claim 1, wherein
both the adhesive monomer unit and the flexible monomer unit are D units, and
the adhesive monomer unit and the flexible monomer unit constitute a linear main chain.

3. The polysiloxane composition according to claim 1, wherein the flexible monomer unit occupies 47% by mol or more and 95% by mol or less of the polysiloxane composition.

4. The polysiloxane composition according to claim 1, wherein the substituent containing the catechol group contains a hydrocarbon group.

5. The polysiloxane composition according to claim 1, wherein the substituent containing the catechol group contains a urea group.

6. The polysiloxane composition according to claim 1, wherein the catechol group is a denatured catechol group having a silylated structure where each hydrogen atom of two hydroxy groups linked at ortho positions of a benzene ring is substituted with an alkylsilyl group.

7. An adhesive comprising:
the polysiloxane composition according to any one of claims 1 to 6.

8. An adhesive comprising:
a first polysiloxane composition and a second polysiloxane composition that each comprise the polysiloxane composition according to any one of claims 1 to 6 and have the flexible monomer unit in content rates different from each other.

9. The adhesive according to claim 8, further comprising:
a third polysiloxane composition that comprises the polysiloxane composition according to any one of claims 1 to 6 and has the flexible monomer unit in a content rate different from those in the first polysiloxane composition and the second polysiloxane composition.

10. A method for producing a polysiloxane composition, the method comprising:
generating a precursor polysiloxane composition that is a copolymer of a first siloxane unit containing a substituent containing a urea group, and a second siloxane unit containing a substituent including a hydrocarbon group; and
introducing, by reacting the precursor polysiloxane composition with catecholamine, a catechol group where two hydroxy groups are linked at ortho positions of a benzene ring, into the first siloxane unit, via a urea bond containing the urea group.

11. The method according to claim 10, wherein the generating comprises:
forming a copolymer of a precursor first siloxane unit that serves as a precursor of the first siloxane unit and contains, in a substituent, a compound containing an ammonium group, and the second siloxane unit; and
replacing, by reacting the formed copolymer with a carbonyl compound, the compound containing the ammonium group, in the precursor first siloxane unit, with a compound containing the urea group.

12. The method according to claim 10, wherein the second siloxane unit is a dimethylsiloxane unit.

13. The method according to claim 10, further comprising:
following the introducing,
substituting, by reacting a polymer obtained in the introducing with a silylation agent, each hydrogen atom of the two hydroxy groups linked at the ortho positions of the benzene ring, with an alkylsilyl group.

14. The method according to claim 13, further comprising:
following the substituting,
reforming, by substituting the alkylsilyl group with the hydrogen atom again, a structure where the two hydroxy groups are linked at the ortho positions of the benzene ring.

15. A method for producing an adhesive, the method comprising:
preparing a first polysiloxane composition and a second polysiloxane composition that are each obtained by the method according to any one of claims 10 to 14 and have the second siloxane unit in content rates different from each other; and
mixing the first polysiloxane composition and the second polysiloxane composition.

16. The method according to claim 15, wherein
in the preparing, at least a third polysiloxane composition is further prepared separately from the first polysiloxane composition and the second polysiloxane composition,
the third polysiloxane composition is obtained by the method according to any one of claims 10 to 14, and has the second siloxane unit in a content rate different from those in the first polysiloxane composition and the second polysiloxane composition, and
in the mixing, at least the third polysiloxane composition is further mixed in addition to the first polysiloxane composition and the second polysiloxane composition.
